# EUROPEAN PATENT APPLICATION

(11) **EP 2 148 160 A2**
(43) Date of publication of application: **27.01.2010**
(21) Application number: 09251849.7
(22) Date of filing: 22.07.2009
(51) Int. Cl.: F28D 1/04, F28D 15/00, F28D 21/00, F24J 3/08

(54) **Isothermal method and device using utility water thermal energy**

(30) Priority: 22.07.2008 US 219410; 22.07.2008 US 219409; 22.07.2008 US 219408
(71) Applicant: Tai-Her, Yang, Si-Hu Town Dzan-Hwa (TW)
(72) Inventor: Tai-Her, Yang, Si-Hu Town Dzan-Hwa (TW)
(74) Representative: Pratt, David Martin

(57) **Abstract**

This invention is the innovation using a particular piping (103) of utility water system and the water flow of utility water as thermal energy transmission fluid, or using thermal transmission method to transmit thermal energy indirectly to another closed piping (121) or thermal energy transmission flow open piping, and pumping of thermal energy transmission flow in the piping through unidirectional or periodic change of pumping flow to enter pseudo transmission thermal energy target or target space directly, or transmitting thermal energy and target or target space of utility water isothermally through isothermal device (122).

## Description

### BACKGROUND OF THE INVENTION

### (a) Field of the invention

The present invention innovatively discloses a particular piping in the utility water system, wherein water flow inside the piping being the thermal energy transfer fluid is indirectly transferred to the thermal energy transfer fluid in another closed piping circuit by thermal transfer method; further, thermal energy transfer fluid inside the piping circuit is pumped by the pump and is through the isothermal device to provide isothermal energy transfer between utility water thermal energy and the target object or target space.

### (b) Description of the Prior Art

The conventional buildings being cooled by air conditioners in the summer and warmed by electric or fuel gas in the winter consume enormous energy; further, as conventional utility water piping being located near earth surface or exposed is frozen with ice in the extreme cold winter, the accumulated snow and frozen ice on the rooftops and roads usually causes disasters, hence, the lower energy consuming strategy for coping with the accumulated snow and frozen ice is required.

### SUMMARY OF THE INVENTION

The present invention discloses that the thermal energy is transferred through the closed loop divided piping being constituted by utility water flow inside the underground water pipe being buried under earth layer, the water pipe leading to earth surface, fluid pump and isothermal device, etc. or is through the fluid inside the closed loop circuit being indirectly constituted by water pipe, fluid pump and isothermal device via thermal transfer method, wherein thermal energy of utility water flow inside underground water pipe is directly or indirectly transferred to the fluid inside the closed water pipe or open pipe leading to earth surface, and it is further through the fluid inside piping being pumped for unidirectional or periodic flow direction change to perform thermal energy transfer with the thermal energy transfer target object or target space via entering target object or target space of pseudo transfer thermal energy or isothermal device.

### BRIEF DESCRIPTION OF THE DRAWINGS

Fig. 1 is a piping layout between conventional utility water piping and the building.
Fig. 2 is the structure schematic view of the present invention showing that the utility water piping is through the close loop divided piping directly constituted by water pipe, fluid pump and isothermal device to provide indoor isothermal function inside the building.
Fig. 3 is a structural schematic view showing the isothermal functioning system of the present invention being applied for shallow earth surface layer.
Fig. 4 is a structural schematic view showing the isothermal functioning system of the present invention being applied for the target being externally exposed out of earth surface.
Fig. 5 is a structural schematic view showing the isothermal functioning system of the present invention being applied in the interior of the top structure of building.
Fig. 6 is a structural schematic view showing the isothermal functioning system of the present invention being applied to be externally exposed on top of the building.
Fig. 7 is a schematic view of the embodiment showing that the present invention is installed with enclosed type isothermal room structure to perform open loop type pumping of fluid in the open space.
Fig. 8 is a schematic view of the system embodiment showing that the present invention is installed with enclosed type isothermal room structure to perform indirect open loop type pumping of fluid in the building or internal spaces of other closed or semi-closed building structures.
Fig. 9 is a schematic view of the system embodiment showing that the present invention is installed with enclosed type isothermal room structure to perform indirect open loop type pumping of fluid in the building or internal spaces of other closed or semi-closed building structures by introducing fluid externally.
Fig. 10 is a schematic view of the system embodiment showing that the present invention is installed with enclosed type isothermal room structure to perform indirect closed loop type fluid circulation in the open space.
Fig. 11 is a schematic view of the system embodiment showing that the present invention is installed with enclosed type isothermal room structure to perform indirect closed loop type fluid circulation in the building or internal spaces of other closed or semi-closed building structures.
Fig. 12 is a schematic view of the system embodiment showing that the present invention is installed with an auxiliary isothermal piping in parallel to utility piping so as to indirectly perform open loop type pumping of fluid in the open space.
Fig. 13 is a schematic view of the system embodiment showing that the present invention is installed with an auxiliary isothermal piping in parallel to utility piping so as to indirectly perform open loop type pumping of fluid in the building or internal spaces of other closed or semi-closed structures.
Fig. 14 is a schematic view of the system embodiment showing that the present invention is installed with an auxiliary isothermal piping in parallel to utility piping so as to indirectly perform closed loop type pumping of fluid in the building or internal spaces of other closed or semi-closed structures by introducing fluid externally.
Fig. 15 is a schematic view of the system embodiment showing that the present invention is installed with an auxiliary isothermal piping in parallel to utility piping so as to indirectly perform closed loop type fluid circulation in the open space.
Fig. 16 is a schematic view of the system embodiment showing that the present invention is installed with an auxiliary isothermal piping in parallel to utility piping so as to indirectly perform closed loop type fluid circulation in the buildings or internal spaces of other closed or semi-closed structures.
Fig. 17 is a schematic view of the system embodiment showing that the present invention is installed with enclosed type isothermal room structure with internal helical isolation structure so as to perform open loop type pumping of fluid in the open space.
Fig. 18 is a schematic view of the system embodiment showing that the present invention is installed with enclosed type isothermal room structure with internal helical isolation structure so as to indirectly perform loop type open pumping of fluid in the buildings or internal spaces of other closed or semi-closed structures.
Fig. 19 is a schematic view of the system embodiment showing that the present invention is installed with enclosed type isothermal room structure with internal helical isolation structure so as to indirectly perform open loop type pumping of fluid in the buildings or internal spaces of other closed or semi-closed structures by introducing fluid externally.
Fig. 20 is a schematic view of the system embodiment showing that the present invention is installed with enclosed type isothermal room structure with internal helical isolation structure so as to indirectly perform closed loop type fluid circulation for open space.
Fig. 21 is a schematic view of the system embodiment showing that the present invention is installed with enclosed type isothermal room structure with internal helical isolation structure so as to indirectly perform closed loop type fluid circulation in the buildings or internal space of other closed or semi-closed structure.
Fig. 22 is a 3D structural schematic view of the isothermal method and device using utility water thermal energy adopting enclosure type piping fluid thermal energy transfer device of the present invention.
Fig. 23 is a cross-sectional view of Fig. 22.
Fig. 24 is a structural schematic view of the present invention showing that the portion of piping casing being enclosed by the hollow enclosure in contact with thermal conducting fluid is additionally installed with thermal conducting fin structure.
Fig. 25 is a cross-sectional view of Fig. 24.
Fig. 26 is a schematic view of the embodiment of the present invention showing two pipes being enclosed by the hollow structure.
Fig. 27 is a cross-sectional view of Fig. 26.
Fig. 28 is a 3D structural schematic view of the isothermal method and device using utility water thermal energy adopting conducting type inter-piping fluid thermal energy transfer device of the present invention.
Fig. 29 is a cross-sectional view of Fig. 28.
Fig. 30 is a structural schematic view of the present invention showing that interior of first piping and second piping are additionally made with heat conducting fins at the locations thereof near to thermal conducting structure.
Fig. 31 is a cross-section view of Fig. 30.
Fig. 32 is a schematic view of the embodiment of the present invention showing that two second piping are connected to the first piping via thermal conducting structure 3000.
Fig. 33 is a cross-sectional view of Fig. 32.
Fig. 34 is a 3D structural schematic view of the helical isolation structure and pipe enclosure structure and pipe to form helical pipe as the pipe in fluid thermal energy transfer device of the present invention.
Fig. 35 is a cross-section view of Fig. 34.

### DESCRIPTION OF MAIN COMPONENT SYMBOLS

- 101:: Earth surface
- 102:: Deeper earth layer
- 103:: Underground water pipe
- 104:: Water supply branch pipe
- 110:: Building
- 111:: Water valve
- 121:: Closed water pipe
- 122:: Isothermal device
- 123:: Fluid pumping device
- 124:: Filter device
- 218:: Fluid inlet
- 219:: Fluid outlet
- 220:: Enclosed type isothermal room structure
- 221, 231:: Fluid piping
- 222:: Auxiliary isothermal piping
- 223:: Thermal conducting fin type structure
- 240:: Enclosed type isothermal room structure with internal helical isolation structure
- 250:: Control device
- 251:: Metering device
- 252:: Flow control valve
- 300:: Piping
- 301:: Fluid inlet
- 301':: Fluid outlet
- 302:: Hollow enclosure
- 303,: 304: Inlet and outlet of the thermal conducting fluid
- 305:: Internal space of hollow enclosure
- 306:: Thermal conducting fin
- 400:: First piping
- 401:: Fluid inlet
- 401':: Fluid outlet
- 403, 404:: Thermal conductive fluid inlet and outlet
- 406:: Internal heat conducting fin
- 500:: Second piping
- 3000:: Thermal conducting structure
- 600:: Piping
- 601:: Fluid inlet
- 601':: Fluid outlet
- 602:: Pipe enclosure structure
- 603,: 604: Fluid inlet and outlet ports
- 605:: Helical pipe space
- 606:: Helical isolation structure

### DETAILED DESCRIPTION OF THE PREFERRED EMBODIMENTS

As is well known, normal stable temperature of utility water no matter in summer or winter is usually around 12-20°C, wherein for the isothermal method and device using utility water thermal energy, the water inside underground water pipe buried under earth layers in the utility water system being used as the thermal energy transfer fluid having its thermal energy is directly transferred or indirectly transferred by thermal transfer method to the thermal energy fluid of another closed piping circuit or open piping circuit; further, the thermal energy transfer fluid is pumped by the pump for unidirectional or periodic flow direction change to enter the target object or target space intended to transfer the thermal energy pumped from thermal energy transfer fluid indirectly by isothermal device so as to transfer thermal energy target or target space thereby saving energy consumption by replacing or providing assistances to conventional high energy consuming devices.

The isothermal effect function using isothermal method and device using utility water thermal energy includes one or more than one effective functions shown below:
1) Use utility water and underground thermal energy of relatively lower temperature to reduce the temperature of the target for transfer on earth surface;
2) Use utility water and underground thermal energy of relatively higher temperature to increase the temperature of the target for transfer on earth surface;

The isothermal method and device using utility water thermal energy includes one or more than one of the application devices in the range listed below for use in target object or target space of isothermal action in order to transfer thermal energy for isothermal adjustment; the target object or target space for isothermal action includes:
-- wherein the target for isothermal action includes one or more than one application devices listed below:
   (1) tooling machine, inspection apparatus, monitoring apparatus, industrial equipment, machinery equipment, dynamo machinery, or electro machinery equipment setup having specific environmental temperature requirement;
   (2) heat dissipation device, electricity storage device, lamp, LED, solar energy generation device, computer, computer peripheral, server, or semiconductor application equipment having heat loss device or component heat dissipation requirement;
   (3) space or warehouse, etc. for storing solid, liquid, or gas chemicals.
   The cooling equipment device using natural thermal energy of utility water system, or the thermal retaining equipment for isothermal action using natural thermal energy of utility water system.
-- wherein the target space for isothermal action contains one or more than one spaces listed below including:
   (1) internal space of semi-closed or closed building;
   (2) internal space of semi-closed or closed structure;
   (3) shallow layer of earth surface;
   (4) all types of open space;
   (5) open earth surface space.

The isothermal target building for isothermal method and device using utility water thermal energy includes target for isothermal adjustment of thermal energy transfer in all kinds of housing, warehouse, or pillar body, or building of other geometrical shape, or dedicated building (e.g. booth) constitute of semi-closed or closed structure which require design for isothermal adjustment thermal energy transfer; or for the use of isothermal transfer such as highway shallow layer of earth surface, or for application in isothermal transfer in exposed type open air public area.

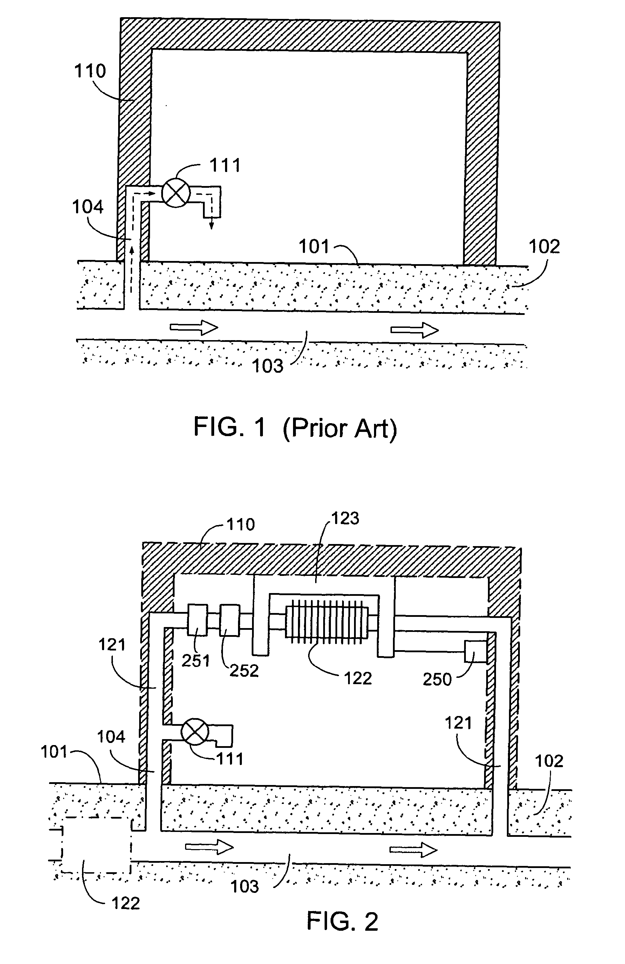

Fig. 1 is a piping layout between conventional utility water piping and the building, wherein:
-- 101 is the earth surface;
-- 102 is the earth layer which has a normal temperature between 12-20°C;
-- 103 is the underground water pipe of conventional utility water system being buried in earth layer 102;
-- 104 is the water supply branch pipe being connected between user water valve 111 and underground water pipe 103 to supply utility system water to the user;
-- 111 is the water valve in user's building 110 for water flow switching operation to obtain the water randomly.

In extreme cold winter, the drawback of internal water in the portion of conventional water branch pipe 104 being located near to earth surface 101 or exposed out of earth surface 101 is easily frozen to clog the water flow due to extreme coldness.

Fig. 2 is the structure schematic view of the present invention showing that the utility water piping is through the close loop divided piping directly constituted by water pipe, fluid pump and isothermal device to provide indoor isothermal function inside the building, wherein it mainly comprises that:
---- The underground water pipe 103: It is buried under earth layer 102 for transferring utility water system water flow, wherein underground water pipe 103 can be constituted by conventional tubular structure, or geometric shaping structures favorable for thermal transfer, and made of various good thermal conductive materials such as metal or other thermal conductive materials thereby allowing utility water to flow through and to rely on underground water pipe 103 to transfer earth layer thermal energy; further underground water pipe 103 can be optionally series connected with an isothermal device 122 as needed to enhance earth layer thermal energy transfer effect;
---- The closed water pipe 121: The closed water pipe 121 itself can be made of conventional tubular structure, or geometrical structures and materials favorable for thermal energy transfer to appear single flow circuit or multi-flow circuits or closed flow circuit in particular bended shape, wherein it is installed at the location closer to earth surface 101 than underground water pipe 103, or at the location to expose out of the earth surface 101, or is buried inside the building 110 itself, or is installed at selected spaces near to the top, wall, interior of floor, or near to the ground or near to the siding in the interior or exterior of the building, wherein inlet of closed water pipe 121 is connected with underground water pipe 103 to introduce water flow from underground water pipe 103 and the outlet end of closed water pipe 121 is connected with another section of underground water pipe 103 to return water flow back to underground water pipe 103 thereby constituting the water flow circuit for isothermal energy transfer through water flow; further, the closed water pipe 121 can be optionally series connected with isothermal device 122 and installed with the fluid pumping device 123 as needed, and can be optionally installed with metering device 251 and flow control valve 252 as needed;
---- The isothermal device 122: The isothermal device 122 being made of good thermal conductive material has a geometric structure shape favorable for thermal transfer; the isothermal device 122 having a flow inlet, internal flow circuit thereof and flow outlet is series connected with underground water pipe 103 or series connected with closed water pipe 121 inside building 110 for isothermally transferring the thermal energy of passing water flow with the peripheral thermal energy of isothermal device 122; the device can be optionally installed as needed to series connect with both or one of the underground water pipe 103, or closed water pipe 121 inside building 110, or it can be optionally selected not to be installed;
---- The fluid pumping device 123: It is used for fluid pumping device that is serially connected to fluid piping through isothermal device 122 in order to generate pumping power for pumping water flow to transfer thermal energy, wherein the pump can be driven by electric motor, engine power, or mechanical or electric power converted from other wind power, thermal energy, temperature-difference energy, or solar energy, etc.;
---- The control device 250: It is for the operation constituted by electromechanical components, solid state electronic components, or microprocessors and relevant software and operative control interfaces to operatively control the fluid pumping device 123;

Besides, the isothermal method and device using utility water thermal energy can also be applied in outdoor public facilities, wherein as it is well known that underground water piping of utility water system is usually buried under public road or other outdoor public places. The snow accumulation or frozen ice on the road may cause traffic difficulties and affect safety, hence the isothermal method and device using utility water thermal energy can be applied for isothermal energy transfer of the shallow earth surface layer in public roads or applied for exposed type isothermal energy transfer in outdoor public places.

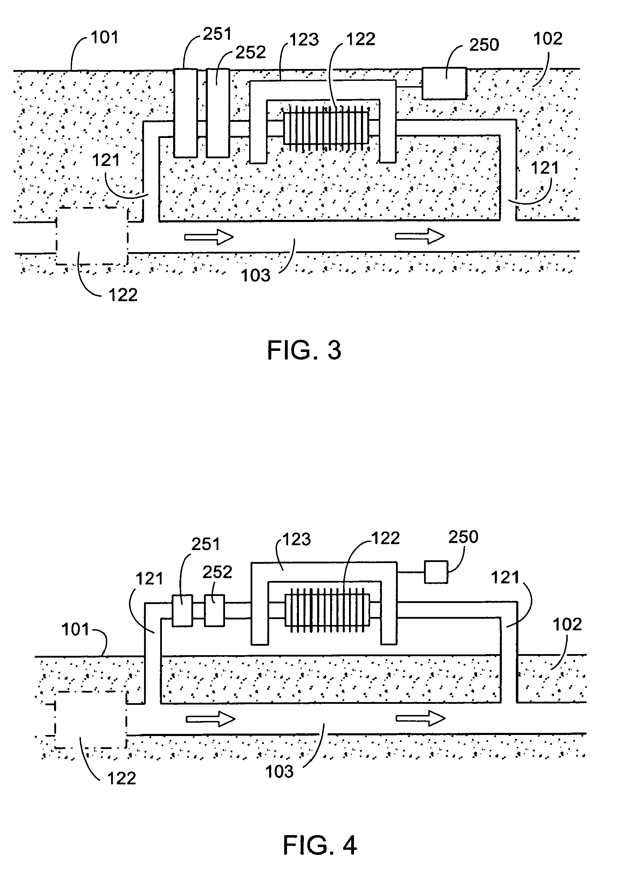

Fig. 3 is a structural schematic view showing the isothermal functioning system of the present invention being applied for shallow earth surface layer; wherein it mainly comprises the following:
---- The underground water pipe 103: It is buried under earth layer 102 for transferring utility water system water flow, wherein underground water pipe 103 can be constituted by conventional tubular structure, or geometric shaping structures favorable for thermal transfer, and made of various good thermal conductive materials such as metal or other thermal conductive materials thereby allowing utility water to flow through and to rely on underground water pipe 103 to transfer earth layer thermal energy, further underground water pipe 103 can be optionally series connected with an isothermal device 122 as needed to enhance earth layer thermal energy transfer effect;
---- The closed water pipe 121: The closed water pipe 121 itself can be made of conventional tubular structure, or geometrical structures and materials favorable for thermal energy transfer to appear single flow circuit or multi-flow circuits or closed flow circuit in particular bended shape, wherein it is installed on the top of building 110 to appear an externally exposed closed water flow circuit, wherein inlet of closed water pipe 121 is connected with underground water pipe 103 to introduce water flow from underground water pipe 103 and the outlet end of closed water pipe 121 is connected with another section of underground water pipe 103 to return water flow back to underground water pipe 103 thereby constituting the water flow circuit for isothermal energy transfer through water flow; further, the closed water pipe 121 can be optionally series connected with isothermal device 122 and installed with the fluid pumping device 123 as needed, and can be optionally installed with metering device 251 and flow control valve 252 as needed;
---- The isothermal device 122: The isothermal device 122 being made of good thermal conductive material has a geometric structure shape favorable for thermal transfer; the isothermal device 122 having a flow inlet, internal flow circuit thereof and flow outlet is series connected with underground water pipe 103 or series connected with the externally exposed closed water pipe 121 on the top of building 110 for isothermally transferring the thermal energy of passing water flow with the peripheral thermal energy of isothermal device 122; the device can be optionally installed as needed to series connect with both or one of the underground water pipe 103, or the externally exposed closed water pipe 121 on the top of building 110, or it can be optionally selected not to be installed;
---- The fluid pumping device 123: It is used for fluid pumping device that is serially connected to fluid piping through isothermal device 122 in order to generate pumping power for pumping water flow to transfer thermal energy, wherein the pump can be driven by electric motor, engine power, or mechanical or electric power converted from other wind power, thermal energy, temperature-difference energy, or solar energy, etc.;
---- The control device 250: It is for the operation constituted by electromechanical components, solid state electronic components, or microprocessors and relevant software and operative control interfaces to operatively control the fluid pumping device 123;

Fig. 4 is a structural schematic view showing the isothermal functioning system of the present invention being applied for target exposed out of the earth surface; wherein it mainly comprises the following:
---- The underground water pipe 103: It is buried under earth layer 102 for transferring utility water system water flow, wherein underground water pipe 103 can be constituted by conventional tubular structure, or geometric shaping structures favorable for thermal transfer, and made of various good thermal conductive materials such as metal or other thermal conductive materials thereby allowing utility water to flow through and to rely on underground water pipe 103 to transfer earth layer thermal energy, further underground water pipe 103 can be optionally series connected with an isothermal device 122 as needed to enhance earth layer thermal energy transfer effect;
---- The closed water pipe 121: The closed water pipe 121 itself can be made of conventional tubular structure, or geometrical structures and materials favorable for thermal energy transfer to appear single flow circuit or multi-flow circuits or closed flow circuit in particular bended shape, wherein it is installed at the location to expose out of earth surface layer 101 to appear closed water flow circuit, wherein inlet of closed water pipe 121 is connected with underground water pipe 103 to introduce water flow from underground water pipe 103 and the outlet end of closed water pipe 121 is connected with another section of underground water pipe 103 to return water flow back to underground water pipe 103 thereby constituting the water flow circuit for isothermal thermal energy transfer through water flow; further, the closed water pipe 121 can be optionally series connected with isothermal device 122 and installed with the fluid pumping device 123 as needed, and can be optionally installed with metering device 251 and flow control valve 252 as needed;
---- The isothermal device 122: The isothermal device 122 being made of good thermal conductive material has a geometrical structure shape favorable for thermal transfer; the isothermal device 122 having a flow inlet, internal flow circuit thereof and flow outlet is series connected with underground water pipe 103 or series connected with closed water pipe 121 for isothermally transferring the thermal energy of passing water flow with the peripheral thermal energy of isothermal device 122; the device can be optionally installed as needed to series connect with both or one of the underground water pipe 103, or closed water pipe 121 being exposed out of earth surface, or it can be optionally selected not to be installed;
---- The fluid pumping device 123: It is used for fluid pumping device that is serially connected to fluid piping through isothermal device 122 in order to generate pumping power for pumping water flow to transfer thermal energy, wherein the pump can be driven by electric motor, engine power, or mechanical or electric power converted from other wind power, thermal energy, temperature-difference energy, or solar energy, etc.;
---- The control device 250: It is for the operation constituted by electromechanical components, solid state electronic components, or microprocessors and relevant software and operative control interfaces to operatively control the fluid pumping device 123;

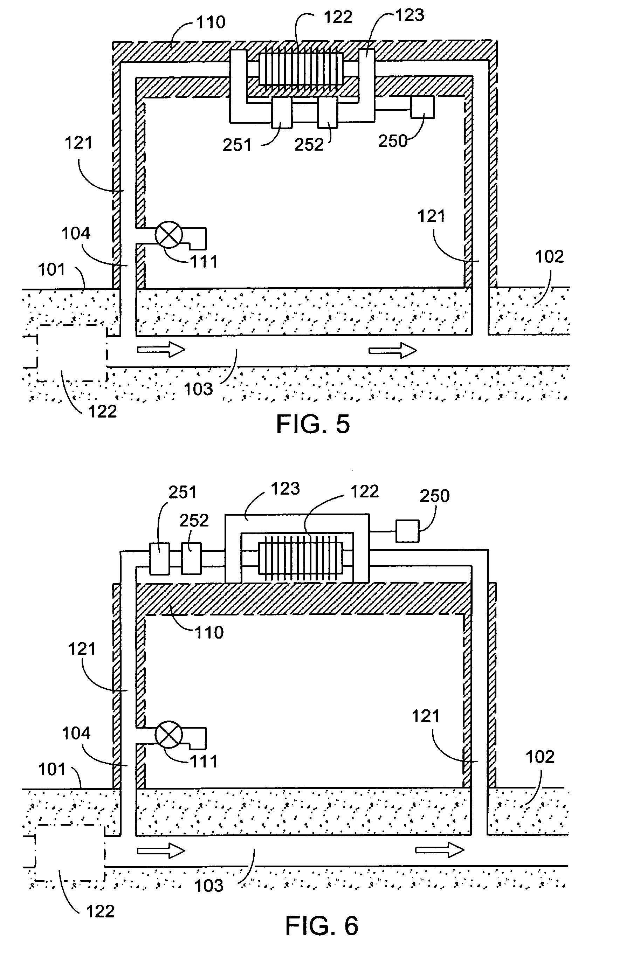

Fig. 5 is a structural schematic view showing the isothermal functioning system of the present invention being applied in the interior of building top structure; wherein it mainly comprises the following
---- The underground water pipe 103: It is buried under earth layer 102 for transferring utility water system water flow, wherein underground water pipe 103 can be constituted by conventional tubular structure, or geometric shaping structures favorable for thermal transfer, and made of various good thermal conductive materials such as metal or other thermal conductive materials thereby allowing utility water to flow through and to rely on underground water pipe 103 to transfer earth layer thermal energy, further underground water pipe 103 can be optionally series connected with an isothermal device 122 as needed to enhance earth layer thermal energy transfer effect;
---- The closed water pipe 121: The closed water pipe 121 itself can be made of conventional tubular structure, or geometrical structures and materials favorable for thermal energy transfer to appear single flow circuit or multi-flow circuits or closed flow circuit in particular bended shape, wherein it is installed inside the top structure of building 110 to appear a closed water flow circuit, wherein inlet of closed water pipe 121 is connected with underground water pipe 103 to introduce water flow from underground water pipe 103 and the outlet end of closed water pipe 121 is connected with another section of underground water pipe 103 to return water flow back to underground water pipe 103 thereby constituting the water flow circuit for isothermal energy transfer through water flow; further, the closed water pipe 121 can be optionally series connected with isothermal device 122 and installed with the fluid pumping device 123 as needed, and can be optionally installed with metering device 251 and flow control valve 252 as needed;
---- The isothermal device 122: The isothermal device 122 being made of good thermal conductive material has a geometrical structure shape favorable for thermal transfer; the isothermal device 122 having a flow inlet, internal flow circuit thereof and flow outlet is series connected with underground water pipe 103 or series connected with closed water pipe 121 for isothermally transferring the thermal energy of passing water flow with the peripheral thermal energy of isothermal device 122; the device can be optionally installed as needed to series connect with both or one of the underground water pipe 103, or closed water pipe 121 inside the top structure of building 110, or it can be optionally selected not to be installed;
---- The fluid pumping device 123: It is used for fluid pumping device that is serially connected to fluid piping through isothermal device 122 in order to generate pumping power for pumping water flow to transfer thermal energy, wherein the pump can be driven by electric motor, engine power, or mechanical or electric power converted from other wind power, thermal energy, temperature-difference energy, or solar energy, etc.;
---- The control device 250: It is for the operation constituted by electromechanical components, solid state electronic components, or microprocessors and relevant software and operative control interfaces to operatively control the fluid pumping device 123;

Fig. 6 is a structural schematic view showing the isothermal functioning system of the present invention being applied on the top of building to appear externally exposed; wherein it mainly comprises the following:
---- The underground water pipe 103: It is buried under earth layer 102 for transferring utility water system water flow, wherein underground water pipe 103 can be constituted by conventional tubular structure, or geometric shaping structures favorable for thermal transfer, and made of various good thermal conductive materials such as metal or other thermal conductive materials thereby allowing utility water to flow through and to rely on underground water pipe 103 to transfer earth layer thermal energy, further underground water pipe 103 can be optionally series connected with an isothermal device 122 as needed to enhance earth layer thermal energy transfer effect;
---- The closed water pipe 121: The closed water pipe 121 itself can be made of conventional tubular structure, or geometrical structures and materials favorable for thermal energy transfer to appear single flow circuit or multi-flow circuits or closed flow circuit in particular bended shape, wherein it is installed on the top of building 110 to appear an externally exposed closed water flow circuit, wherein inlet of closed water pipe 121 is connected with underground water pipe 103 to introduce water flow from underground water pipe 103 and the outlet end of closed water pipe 121 is connected with another section of underground water pipe 103 to return water flow back to underground water pipe 103 thereby constituting the water flow circuit for isothermal energy transfer through water flow; further, the closed water pipe 121 can be optionally series connected with isothermal device 122 and installed with the fluid pumping device 123 as needed, and can be optionally installed with metering device 251 and flow control valve 252 as needed;
---- The isothermal device 122: The isothermal device 122 being made of good thermal conductive material has a geometric structure shape favorable for thermal transfer; the isothermal device 122 having a flow inlet, internal flow circuit thereof and flow outlet is series connected with underground water pipe 103 or series connected with the externally exposed closed water pipe 121 on the top of building 110 for isothermally transferring the thermal energy of passing water flow with the peripheral thermal energy of isothermal device 122; the device can be optionally installed as needed to series connect with both or one of the underground water pipe 103, or the externally exposed closed water pipe 121 on the top of building 110, or it can be optionally selected not to be installed;
---- The fluid pumping device 123: It is used for fluid pumping device that is serially connected to fluid piping through isothermal device 122 in order to generate pumping power for pumping water flow to transfer thermal energy, wherein the pump can be driven by electric motor, engine power, or mechanical or electric power converted from other wind power, thermal energy, temperature-difference energy, or solar energy, etc.;
---- The control device 250: It is for the operation constituted by electromechanical components, solid state electronic components, or microprocessors and relevant software and operative control interfaces to operatively control the fluid pumping device 123;

Embodiments for isothermal device 122 of the isothermal method and device using utility water thermal energy can be selected from one or more than one embodiments as follows:
(1) The isothermal device is installed in the underground layer to series connect with underground water pipe;
(2) The isothermal device is installed near to earth surface or being exposed out of earth surface to series connect with closed water pipe;
(3) Both underground water pipe and closed water pipe are all series connected with isothermal device;
(4) Both underground water pipe and closed water pipe are not installed with isothermal device;
(5) The isothermal functions of isothermal device can be achieved by underground water pipe or closed water pipe themselves, or the isothermal function is enhanced by additionally installing a structure body having good thermal conductivity on underground water pipe or the outside of closed water pipe.

Further, to promote the integral efficiency, the isothermal method and device using utility water thermal energy can be additionally installed with insulation material between underground water pipe and closed water pipe being externally exposed out of or near to earth surface according to construction environment or function requirements, or this section of closed water pipe can be made of insulation material to avoid thermal energy loss.

For the isothermal method and device using utility water thermal energy, the connection relationships between closed water pipe and underground water pipe include one or more than one connections listed below:
(1) The flow inlet of closed water pipe can be connected to upstream end of underground water pipe while flow outlet is connected to its downstream end;
(2) The flow inlet of closed water pipe can be connected to downstream end of underground water pipe while flow outlet is connected to its upstream end.

For the isothermal method and device using utility water thermal energy, the fluid pumping device for pumping flow can be optionally installed in considering the application occasions and cost effectiveness, wherein besides of installing fluid pumping device for pumping water flow to be the thermal energy carrier, the cold-drop, hot-rise convection effect can be utilized to form water circulating flow, or the divided water flow formed by water flow of underground water pipe is passed through closed water pipe to be the thermal energy transfer fluid for isothermal thermal energy transfer, wherein beside that water flow passing through closed water pipe is directly pumped by the fluid pumping device, the methods for moving water flow include one or more than one methods of the following:
(1) The underground water piping flow is made to introduce water flow from the flow inlet of closed water pipe being connected to the upstream end at a particular angle such as that sharp angle < 90° to flow direction of underground water pipe and appear positive pressure is favorable for introducing water flow to enter closed water pipe, while flow outlet of closed water pipe being at a particular angle such as > 90° obtuse angle to underground water pipe flow direction and appear negative pressure is favorable for water discharge via flow outlet of closed water pipe so as to converge with water flow of underground water pipe thereby forming the divided flow effect, wherein the divided water flow passing through closed water pipe is deemed as the thermal energy transfer fluid for isothermal heat transfer and is used to operatively control the fluid valve for periodic flow direction change; or
(2) Through one or more than one method of the water flow pumping, clod-drop, hot-rise effect or divided flow effect, water flow passing through closed circuit water pipe is deemed as the thermal energy transfer fluid for isothermal heat transfer to target object or target space indirectly.

The isothermal method and device using utility water thermal energy can be simultaneously applied by combining closed water pipe and water supply branch pipe, wherein partial conventional water supply branch pipe is used as the common water pipe to combine with partial closed water pipe so as to constitute the integrated type closed water flow circuit, and if the integrated type closed water circuit is optionally installed with fluid pumping device, then it can be that:
(1) The fluid pumping device is installed on the closed water pipe; or
(2) The fluid pumping device is installed on the common pipe.

For the isothermal method and device using utility water thermal energy, the effect and effectiveness by adopting the integrated type closed water flow circuit includes at least one or more than one functions as the following:
(1) By carrying water flow of higher thermal energy, it can avoid the portion near to earth surface and the exposed portion of the conventional water supply branch pipe to be frozen with ice due to too low temperature at the outside; or
(2) By carrying water flow of lower temperature, temperature of the building itself or inside the building can be lowered during summer times; or
(3) By carrying water flow of higher temperature, it is possible to maintain higher temperature than the one of external environment during cold winter without heating, or it can be applied to melt away the accumulated snow on the rooftops to avoid frozen ice.

For the isothermal method and device using utility water thermal energy, the thermal energy transfer method can be further constituted by indirect thermal energy transferring structures, wherein underground or aboveground utility piping of utility water system is provided with the enclosed type isothermal room structure, wherein thermal energy of utility piping inside water flow is transferred to the target object or target space indirectly by allowing the gaseous or liquid state fluid inside the enclosed type isothermal room to pass through the isothermal target object or target space such as the open space, building or the internal space of other closed or semi-closed structure thereby indirectly constituting the indirect isothermal energy transfer.

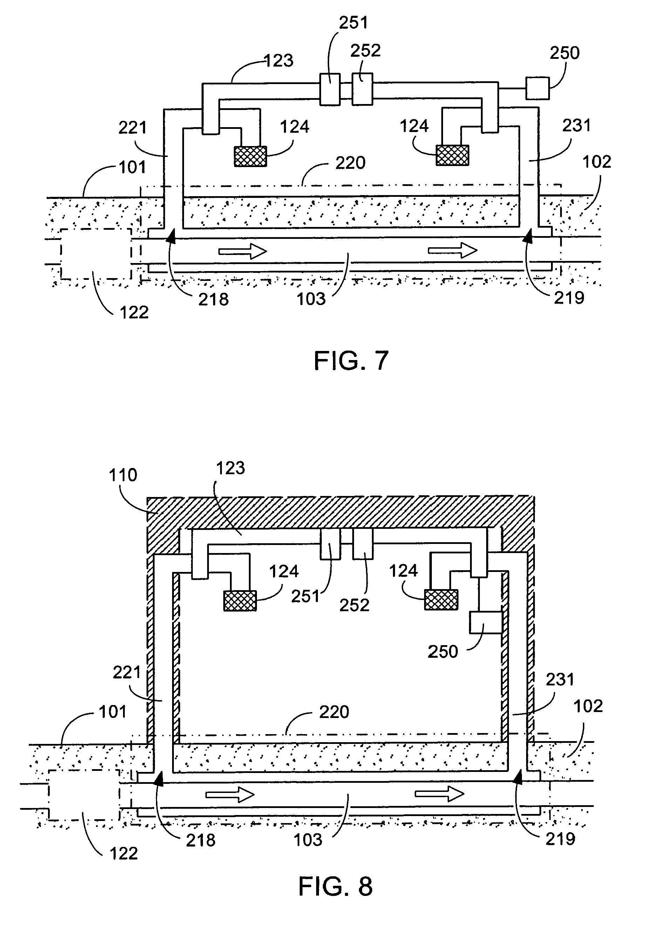

Fig. 7 is a schematic view of the embodiment showing that the present invention is installed with enclosed type isothermal room structure to perform open loop type pumping of fluid in the open space;

The system includes that the peripheral surrounding of one section of underground water pipe 103 in the utility water system is provided with an enclosed type isothermal room structure 220 being closed at both ends thereof, wherein it is installed with at least one fluid inlet 218 and a fluid piping 221 for connection to open space on one side of the closed end surface thereof, and is installed with at least one fluid outlet 219 and fluid piping 231 for connection to open space on another end thereof thereby allowing gaseous or liquid state fluid to flow in and out, and metering device 251 and flow control valve 252 can be optionally installed as needed. Said fluid is convectively circulated by the cold-drop, hot-rise effect, or is installed with fluid pumping device 123 being driven by electric motor, or other mechanical power or manpower in order when adopting unidirectional pumping to pump fluid passing through enclosed type isothermal room structure 220 to the open space via fluid piping 221 and the fluid is returned to enclosed type isothermal room structure 220 via fluid piping 231. While adopting periodic alternative pumping, one of the pumping direction is as stated above while the other is pumping the fluid, it is sent to open space via fluid piping 231, and the fluid is returned to enclosed type isothermal room structure 220 via fluid piping 221 thus performing the isothermal energy transfer to indirectly transfer thermal energy of utility water system to the open space. The above said fluid piping 221 and fluid piping 231 are individually connected to open space. The fluid inlet and outlet of fluid piping 221 and fluid piping 231 can be optionally installed with filter device 124 or not to be installed;
---- The control device 250: It is for the operation constituted by electromechanical components, solid state electronic components, or microprocessors and relevant software and operative control interfaces to operatively control the fluid pumping device 123;

Fig. 8 is a schematic view of the system embodiment showing that the present invention is installed with enclosed type isothermal room structure to perform open loop type pumping of fluid in the building or internal spaces of other closed or semi-closed building structures;

The system includes that the peripheral surrounding of one section of underground water pipe 103 in the utility water system is provided with an enclosed type isothermal room structure 220 being closed at both ends thereof, wherein it is installed with at least one fluid inlet 218 and a fluid piping 221 for connection to building 110 or internal places of other closed or semi-closed structures on one side of the closed end surface thereof, and is installed with at least one fluid outlet 219 and fluid piping 231 for connection to building 110 or internal spaces of other closed or semi-closed structures on another end thereof thereby allowing gaseous or liquid state fluid to flow in and out, and metering device 251 and flow control valve 252 can be optionally installed as needed. Said fluid is convectively circulated by the cold-drop, hot-rise effect, or is installed with fluid pumping device 123 being driven by electric motor, or other mechanical power or manpower in order when adopting unidirectional pumping to pump fluid passing through enclosed type isothermal room structure 220 to building 110 or internal spaces of other closed or semi-closed structures via fluid piping 221 and the fluid is returned to enclosed type isothermal room structure 220 via fluid piping 231. While adopting periodic alternative pumping, one of the pumping direction is as stated above while the other is pumping the fluid, it is sent to building 110 or internal spaces of other closed or semi-closed structures via fluid piping 231 and the fluid is returned to enclosed type isothermal room structure 220 via fluid piping 221 thus performing the isothermal energy transfer to indirectly transfer thermal energy of utility water system to the building 110 or other closed or semi-closed structures. The above said fluid piping 221 and fluid piping 231 being individually connected to building 110 or internal spaces of other closed or semi-closed structures. The fluid inlet and outlet of fluid piping 221 and fluid piping 231 can be optionally installed with filter device 124 or not to be installed;
---- The control device 250: It is for the operation constituted by electromechanical components, solid state electronic components, or microprocessors and relevant software and operative control interfaces to operatively control the fluid pumping device 123;

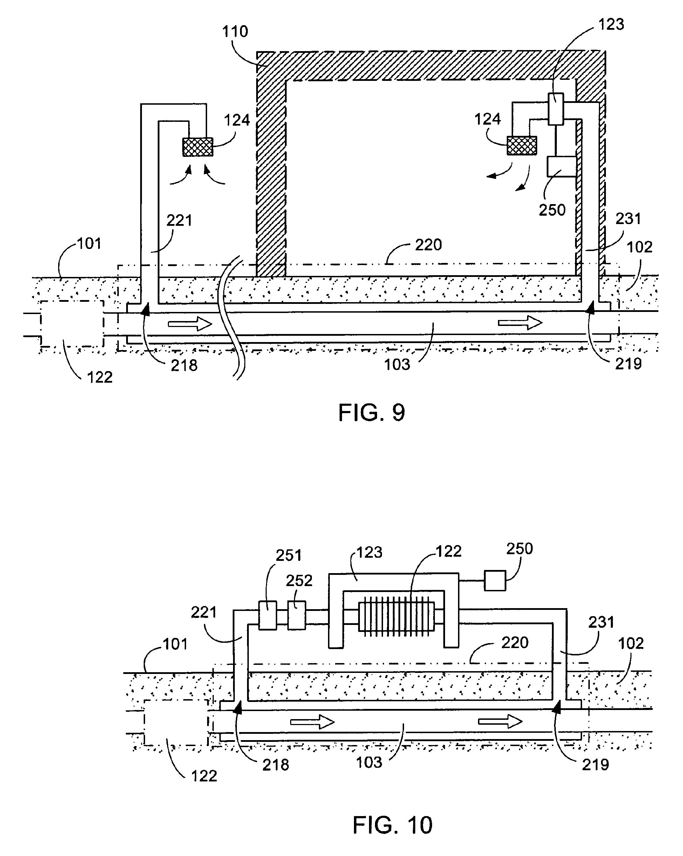

Fig. 9 is a schematic view of the system embodiment showing that the present invention is installed with enclosed type isothermal room structure to perform indirect open loop type pumping of fluid in the building or internal spaces of other closed or semi-closed building structures by introducing fluid externally.

The system includes that the peripheral surrounding of one section of underground water pipe 103 in the utility water system is provided with an enclosed type isothermal room structure 220 being closed at both ends thereof, wherein it is installed with at least one fluid inlet 218 and a fluid piping 221 for connection to building 110 or internal places of other closed or semi-closed structures on one side of the closed end surface thereof, and is installed with at least one fluid outlet 219 and fluid piping 231 for connection to building 110 or internal spaces of other closed or semi-closed structures on another end thereof thereby allowing gaseous or liquid state fluid to flow in and out, and metering device 251 and flow control valve 252 can be optionally installed as needed. Said fluid is convectively circulated by the cold-drop, hot-rise effect, or is installed with fluid pumping device 123 being driven by electric motor, or other mechanical power or manpower while adopting unidirectional pumping to pump outdoor fluid or through fluid piping 221 and enclosed type isothermal room structure 220 and passing through fluid piping 231 to building 110 or internal spaces of other closed or semi-closed structures, in order to perform the isothermal energy transfer to indirectly transfer thermal energy of utility water system to the building 110 or other closed or semi-closed structures. The above said fluid piping 221 is for connection to outdoor space and fluid piping 231 is connected to building 110 or internal spaces of other closed or semi-closed structures, wherein fluid inlet and outlet of fluid piping 221 and fluid piping 231 can be optionally installed with filter device 124 or not to be installed;
---- The control device 250: It is for the operation constituted by electromechanical components, solid state electronic components, or microprocessors and relevant software and operative control interfaces to operatively control the fluid pumping device 123;

Fig. 10 is a schematic view of the system embodiment showing that the present invention is installed with enclosed type isothermal room structure to perform indirect closed loop type fluid circulation in the open space;

The system includes that the peripheral surrounding of one section of underground water pipe 103 in the utility water system is provided with an enclosed type isothermal room structure 220 being closed at both ends thereof, wherein it is installed with at least one fluid inlet 218 and a fluid piping 221 for connection to open space on one side of the closed end surface thereof, and is installed with at least one fluid outlet 219 and fluid piping 231 for connection to open space on another end thereof thereby allowing gaseous or liquid state fluid to flow in and out, and metering device 251 and flow control valve 252 can be optionally installed as needed. Said fluid is convectively circulated by the cold-drop, hot-rise effect, or is installed with fluid pumping device 123 being driven by electric motor, or other mechanical power or manpower so that while adopting unidirectional pumping to pump fluid passing through enclosed type isothermal room structure 220 to the isothermal device 122 in the open space via fluid piping 221 and the fluid is returned to enclosed type isothermal room structure 220 via fluid piping 231. While adopting periodic alternating directional pumping, one of the pumping direction is as stated above and the other in pumping the flow, it is sent to the isothermal device 122 in the open space via fluid piping 231 and the fluid is returned to enclosed type isothermal room structure 220 via fluid piping 221 thus performing the isothermal energy transfer to indirectly transfer thermal energy of utility water system to the open space. The above said fluid piping 221 and fluid piping 231 being individually connected to the isothermal device 122;
---- The control device 250: It is for the operation constituted by electromechanical components, solid state electronic components, or microprocessors and relevant software and operative control interfaces to operatively control the fluid pumping device 123;

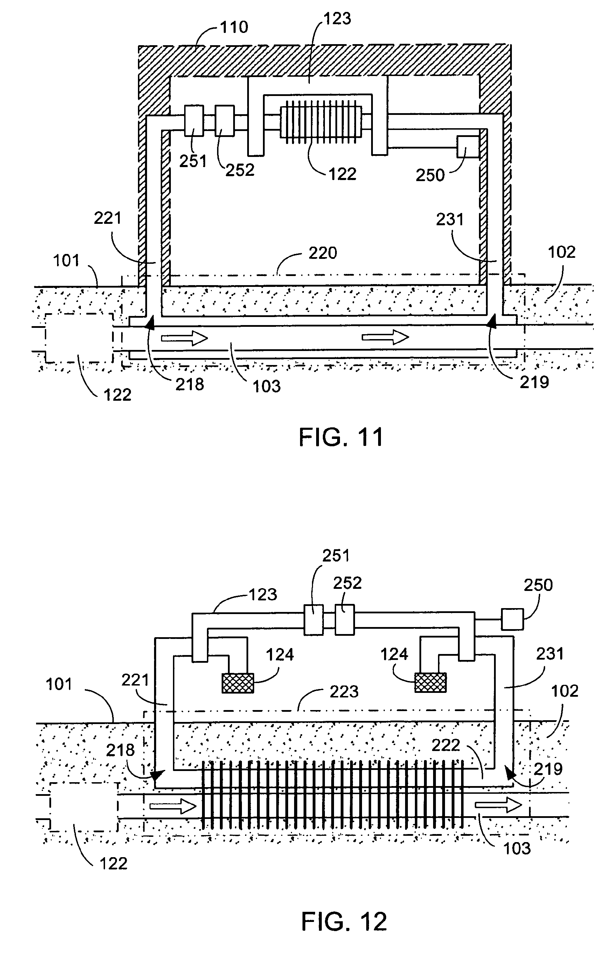

Fig. 11 is a schematic view of the system embodiment showing that the present invention is installed with enclosed type isothermal room structure to perform indirect closed loop type fluid circulation in the building or internal spaces of other closed or semi-closed building structures;

The system includes that the peripheral surrounding of one section of underground water pipe 103 in the utility water system is provided with an enclosed type isothermal room structure 220 being closed at both ends thereof, wherein it is installed with at least one fluid inlet 218 and a fluid piping 221 for connection to building 110 or the isothermal device 122 in internal places of other closed or semi-closed structures on one side of the closed end surface thereof, and is installed with at least one fluid outlet 219 and fluid piping 231 for connection to building 110 or the isothermal device 122 in internal spaces of other closed or semi-closed structures on another end thereof thereby allowing gaseous or liquid state fluid to flow in and out, and metering device 251 and flow control valve 252 can be optionally installed as needed. Said fluid is convectively circulated by the cold-drop, hot-rise effect, or is installed with fluid pumping device 123 being driven by electric motor, or other mechanical power or manpower so that while adopting unidirectional pumping to pump fluid passing through enclosed type isothermal room structure 220 to the isothermal device 122 and building 110 or internal spaces of other closed or semi-closed structures via fluid piping 221 and the fluid is returned to enclosed type isothermal room structure 220 via fluid piping 231. While adopting periodic alternating directional pumping, one of the pumping direction is as stated above and the other in pumping the flow, it is sent to building 110 or the isothermal device 122 in internal spaces of other closed or semi-closed structures via fluid piping 231 and the fluid is returned to enclosed type isothermal room structure 220 via fluid piping 221 thus performing the isothermal energy transfer to indirectly transfer thermal energy of utility water system to the building 110 or other closed or semi-closed structures. The above said fluid piping 221 and fluid piping 231 are individually connected to the isothermal device 122 in the building 110 or internal spaces of other closed or semi-closed structures;
---- The control device 250: It is for the operation constituted by electromechanical components, solid state electronic components, or microprocessors and relevant software and operative control interfaces to operatively control the fluid pumping device 123;

For the isothermal method and device using utility water thermal energy, the underground or aboveground utility piping can also be installed with the thermal energy transfer structure in parallel, such as the auxiliary isothermal energy piping of heat conducting fin type structures for mutual thermal energy transfer is provided to allow the gaseous or liquid state fluid for passing through target object or target space to perform isothermal energy transfer of the internal water flow thermal energy inside utility water piping and the one of target object or target space.

Fig. 12 is a schematic view of the system embodiment showing that the present invention is installed with an auxiliary isothermal piping in parallel to utility piping so as to indirectly perform open loop type pumping of fluid in the open space;

The system includes that the peripheral surrounding of one section of underground water pipe 103 in the utility water system is parallel provided with at least one auxiliary isothermal piping 222 being able to mutually transfer thermal energy, wherein the two can be made to an integral body, or mutually connected structures for easy thermal energy transfer, or the thermal conducting fin type structure 223 or other thermal conducting structure or heat pipe device can be installed between the two to indirectly transfer the thermal energy of water flow inside underground water pipe 103 in the utility water system to the fluid inside auxiliary isothermal piping 222, wherein two ends of auxiliary isothermal piping 222 is installed with at least one fluid inlet 218 and a fluid piping 221 for connection to open space at one end thereof, and is installed with at least one fluid outlet 219 and fluid piping 231 for connection to open space on another end thereof thereby allowing gaseous or liquid state fluid to flow in and out, and metering device 251 and flow control valve 252 can be optionally installed as needed. Said fluid is convectively circulated by the cold-drop, hot-rise effect, or is installed with fluid pumping device 123 being driven by electric motor, or other mechanical power or manpower so that while adopting unidirectional pumping to pump fluid passing through auxiliary isothermal piping 222 to the open space via fluid piping 221 and the fluid in the open space is returned to auxiliary isothermal piping 222 via fluid piping 231. While adopting periodic alternating directional pumping, one of the pumping direction is as stated above and the other in pumping the flow, it is sent to open space via fluid piping 231 and the fluid is returned to auxiliary isothermal piping 222 via fluid piping 221 thus performing the isothermal energy transfer to indirectly transfer thermal energy of utility water system to the open space. The above said fluid piping 221 and fluid piping 231 are individually connected to open space. The fluid inlet and outlet of fluid piping 221 and fluid piping 231 can be optionally installed with filter device 124 or not to be installed;
---- The control device 250: It is for the operation constituted by electromechanical components, solid state electronic components, or microprocessors and relevant software and operative control interfaces to operatively control the fluid pumping device 123;

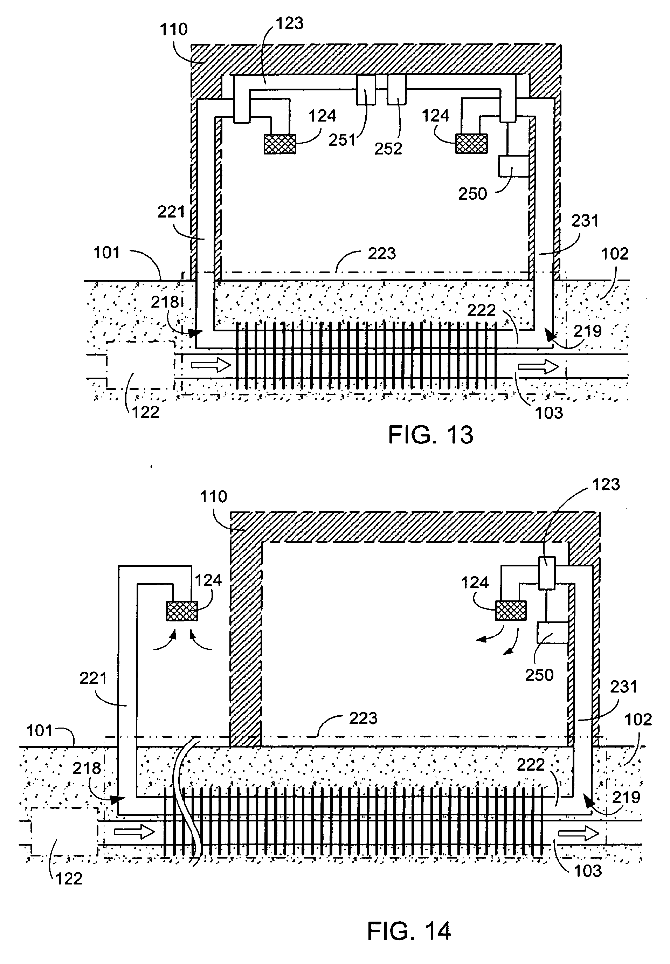

Fig. 13 is a schematic view of the system embodiment showing that the present invention is installed with an auxiliary isothermal piping in parallel to utility piping so as to indirectly perform open loop type pumping of fluid in the building or internal spaces of other closed or semi-closed structures;

The system includes that the peripheral surrounding of one section of underground water pipe 103 in the utility water system is parallel provided with at least one auxiliary isothermal piping 222 being able to mutually transfer thermal energy, wherein the two can be made to an integral body, or mutually connected structures for easy thermal energy transfer, or the thermal conducting fin type structure 223 or other thermal conducting structure or heat pipe device can be installed between the two to indirectly transfer the thermal energy of water flow inside underground water pipe 103 in the utility water system to the fluid inside auxiliary isothermal piping 222, wherein two ends of auxiliary isothermal piping 222 is installed with at least one fluid inlet 218 and a fluid piping 221 for connection to building 110 or internal spaces of other closed or semi-closed structures at one end thereof, and is installed with at least one fluid outlet 219 and fluid piping 231 for connection to building 110 or internal spaces of other closed or semi-closed structures on another end thereof thereby allowing gaseous or liquid state fluid to flow in and out, and metering device 251 and flow control valve 252 can be optionally installed as needed. Said fluid is convectively circulated by the cold-drop, hot-rise effect, or is installed with fluid pumping device 123 being driven by electric motor, or other mechanical power or manpower so that while adopting unidirectional pumping to pump fluid passing through auxiliary isothermal piping 222 to the building 110 or internal spaces of other closed or semi-closed structures via fluid piping 221 and the fluid in the building 110 or internal spaces of other closed or semi-closed structures is returned to auxiliary isothermal piping 222 via fluid piping 231. While adopting periodic alternating directional pumping, one of the pumping direction is as stated above and the other in pumping the flow, it is sent to building 110 or internal spaces of other closed or semi-closed structures via fluid piping 231 and the fluid is returned to auxiliary isothermal piping 222 via fluid piping 221 thus performing the isothermal energy transfer to indirectly transfer thermal energy of utility water system to the building 110 or internal spaces of other closed or semi-closed structures. The above said fluid piping 221 and fluid piping 231 are individually connected to building 110 or internal spaces of other closed type structures. The fluid inlet and outlet of fluid piping 221 and fluid piping 231 can be optionally installed with filter device 124 or not to be installed;
---- The control device 250: It is for the operation constituted by electromechanical components, solid state electronic components, or microprocessors and relevant software and operative control interfaces to operatively control the fluid pumping device 123;

Fig. 14 is a schematic view of the system embodiment showing that the present invention is installed with an auxiliary isothermal piping in parallel to utility piping so as to indirectly perform open loop type pumping of fluid in the buildings or internal spaces of other closed or semi-closed structures by introducing fluid externally.

The system includes that the peripheral surrounding of one section of underground water pipe 103 in the utility water system is parallel provided with at least one auxiliary isothermal piping 222 being able to mutually transfer thermal energy, wherein the two can be made to an integral body, or mutually connected structures for easy thermal energy transfer, or the thermal conducting fin type structure 223 or other thermal conducting structure or heat pipe device can be installed between the two to indirectly transfer the thermal energy of water flow inside underground water pipe 103 in the utility water system to the fluid inside auxiliary isothermal piping 222, wherein one end of auxiliary isothermal piping 222 is installed with at least one fluid inlet 218, fluid piping 221 is connected to outdoor space, the other end is installed with at least a fluid outlet 219, and a fluid piping 231 for connection to building 110 or internal spaces of other closed or semi-closed structures at one end thereof, allowing the flow of gaseous or liquid state fluid, and metering device 251 and flow control valve 252 can be optionally installed as needed. Said fluid is convectively circulated by the cold-drop, hot-rise effect, or is installed with fluid pumping device 123 being driven by electric motor, or other mechanical power or manpower while adopting single flow pumping to pump outdoor fluid flowing through fluid piping 221 passing through auxiliary isothermal piping 222 and through fluid piping 231 to the building 110 or internal spaces of other closed or semi-closed structures, in order to perform the isothermal energy transfer to indirectly transfer thermal energy of utility water system to the building 110 or internal spaces of other closed or semi-closed structures. The above said fluid piping 221 for connecting in parallel to outdoor space, and fluid piping 231 is connected to building 110 or internal spaces of other closed type structures. The fluid inlet and outlet of fluid piping 221 and fluid piping 231 can be optionally installed with filter device 124 or not to be installed;
---- The control device 250: It is for the operation constituted by electromechanical components, solid state electronic components, or microprocessors and relevant software and operative control interfaces to operatively control the fluid pumping device 123;

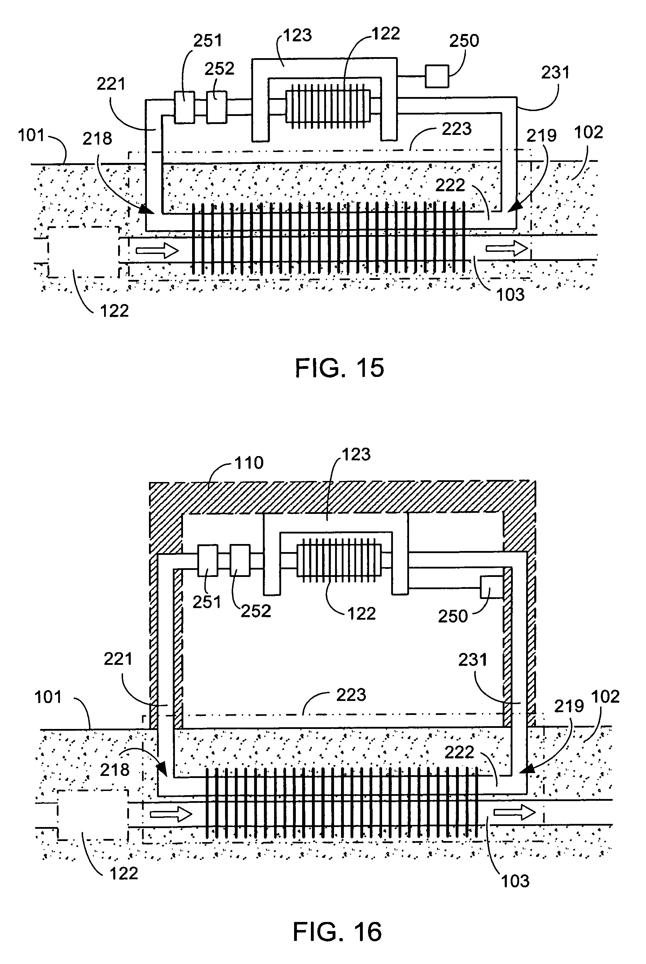

Fig. 15 is a schematic view of the system embodiment showing that the present invention is installed with an auxiliary isothermal piping in parallel to utility piping so as to indirectly perform closed loop type fluid circulation in the open space;

The system includes that the peripheral surrounding of one section of underground water pipe 103 in the utility water system is parallel provided with at least one auxiliary isothermal piping 222 being able to mutually transfer thermal energy, wherein the two can be made to an integral body, or mutually connected structures for easy thermal energy transfer, or the thermal conducting fin type structure 223 or other thermal conducting structure or heat pipe device can be installed between the two to indirectly transfer the thermal energy of water flow inside underground water pipe 103 in the utility water system to the fluid inside auxiliary isothermal piping 222, wherein two ends of auxiliary isothermal piping 222 is installed with at least one fluid inlet 218 and a fluid piping 221 for connection to open space at one end thereof, and is installed with at least one fluid outlet 219 and fluid piping 231 for connection to open space on another end thereof thereby allowing gaseous or liquid state fluid to flow in and out, and metering device 251 and flow control valve 252 can be optionally installed as needed. Said fluid is convectively circulated by the cold-drop, hot-rise effect, or is installed with fluid pumping device 123 being driven by electric motor, or other mechanical power or manpower so that while adopting unidirectional pumping to pump fluid passing through auxiliary isothermal piping 222 to isothermal device 122 in the open space via fluid piping 221 and the fluid in the open space is returned to auxiliary isothermal piping 222 via fluid piping 231. While adopting periodic alternating directional pumping, one of the pumping direction is as stated above and the other in pumping the flow, it is sent to isothermal device 122 in the open space via fluid piping 231 and the fluid is returned to auxiliary isothermal piping 222 via fluid piping 221 thus performing the isothermal energy transfer to indirectly transfer thermal energy of utility water system to the open space via isothermal device 122. The above said fluid piping 221 and fluid piping 231 being individually connected to the isothermal device 122 installed in the open space of the target;
---- The control device 250: It is for the operation constituted by electromechanical components, solid state electronic components, or microprocessors and relevant software and operative control interfaces to operatively control the fluid pumping device 123;

Fig. 16 is a schematic view of the system embodiment showing that the present invention is installed with an auxiliary isothermal piping in parallel to utility piping so as to indirectly perform closed loop type fluid circulation in the buildings or internal spaces of other closed or semi-closed structures;

The system includes that the peripheral surrounding of one section of underground water pipe 103 in the utility water system is parallel provided with at least one auxiliary isothermal piping 222 being able to mutually transfer thermal energy, wherein the two can be made to an integral body, or mutually connected structures for easy thermal energy transfer, or the thermal conducting fin type structure 223 or other thermal conducting structure or heat pipe device can be installed between the two to indirectly transfer the thermal energy of water flow inside underground water pipe 103 in the utility water system to the fluid inside auxiliary isothermal piping 222, wherein two ends of auxiliary isothermal piping 222 is installed with at least one fluid inlet 218 and a fluid piping 221 for connection to building 110 or internal spaces of other closed or semi-closed structures at one end thereof, and is installed with at least one fluid outlet 219 and fluid piping 231 for connection to building 110 or internal spaces of other closed or semi-closed structures on another end thereof thereby allowing gaseous or liquid state fluid to flow in and out, and metering device 251 and flow control valve 252 can be optionally installed as needed. Said fluid is convectively circulated by the cold-drop, hot-rise effect, or is installed with fluid pumping device 123 being driven by electric motor, or other mechanical power or manpower so that while adopting unidirectional pumping to pump fluid passing through auxiliary isothermal piping 222 to the isothermal device 122 in the building 110 or internal spaces of other closed or semi-closed structures via fluid piping 221. While adopting periodic alternating directional pumping, one of the pumping direction is as stated above and the other in pumping the flow, and the fluid is returned to enclosed type isothermal room structure 220 via fluid piping 231, or it is sent to isothermal device 122 in building 110 or internal spaces of other closed or semi-closed structures via fluid piping 231 and the fluid is returned to enclosed type isothermal room structure 220 via fluid piping 221 thus performing the isothermal energy transfer to indirectly transfer thermal energy of utility water system to building 110 or internal spaces of other closed type structures via isothermal device 122. The above said fluid piping 221 and fluid piping 231 are individually connected to the isothermal device 122 in the building 110 or internal spaces of other closed type structures;
---- The control device 250: It is for the operation constituted by electromechanical components, solid state electronic components, or microprocessors and relevant software and operative control interfaces to operatively control the fluid pumping device 123;

The system of isothermal method and device using utility water thermal energy can also include enclosed isothermal room structure for underground or aboveground utility water by internally installing helical isolation structure to perform isothermal transfer indirectly in the thermal energy and target object or target space of utility water piping;

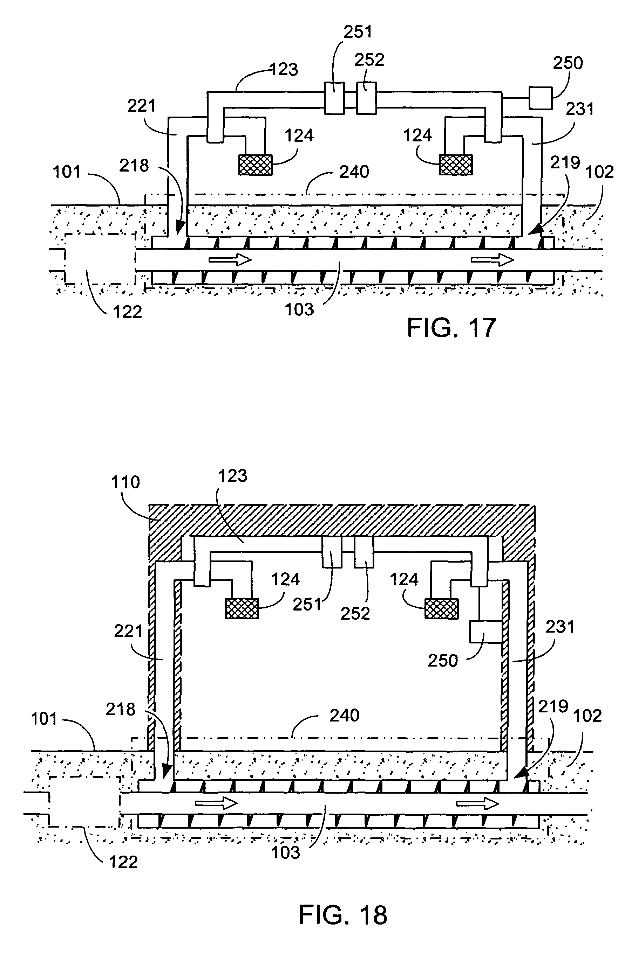

Fig. 17 is a schematic view of the system embodiment showing that the present invention is installed with enclosed type isothermal room structure with internal helical isolation structure so as to perform open loop type pumping of fluid in the open space.

The system includes that the peripheral surrounding of one section of underground water pipe 103 in the utility water system is provided with an enclosed type isothermal room structure with internal helical isolation structure 240, wherein the two ends of the enclosed type isothermal room structure with internal helical isolation structure 240 are in enclosed form, one end close to the closed surface is installed with at least a fluid inlet 218, and a fluid piping 221 passing to open space, and the other end is installed with at least a fluid outlet 219, and a fluid piping 231 passing to open space, and metering device 251 and flow control valve 252 can be optionally installed as needed. Said fluid is convectively circulated by the cold-drop, hot-rise effect, or is installed with fluid pumping device 123 being driven by electric motor, or other mechanical power or manpower while adopting unidirectional pumping, the fluid of enclosed type isothermal room structure with internal helical isolation structure 240 to flow through fluid piping 221 passing to open space, the fluid in open space passing through fluid piping 231 and return to the enclosed type isothermal room structure with internal helical isolation structure 240, thus when adopting periodic alternating flow pumping the flow of one of the pumping is as stated above while the other flow pumping flows through fluid piping 231 passing to open space, wherein the flow in open space passes fluid piping 221 and return to the enclosed type isothermal room structure with internal helical isolation structure 240, in order to performing the isothermal energy transfer to indirectly transfer thermal energy of utility water system to open space. The above said fluid piping 221 and fluid piping 231 being individually connected to the open spaces, the fluid inlet and outlet of fluid piping 221 and fluid piping 231 can optionally install filtering device 124 as needed or not to be installed;
---- The control device 250: It is for the operation constituted by electromechanical components, solid state electronic components, or microprocessors and relevant software and operative control interfaces to operatively control the fluid pumping device 123;

Fig. 18 is a schematic view of the system embodiment showing that the present invention is installed with enclosed type isothermal room structure with internal helical isolation structure so as to indirectly perform open loop type pumping of fluid in the buildings or internal spaces of other closed or semi-closed structures.

Fig. 18 is a schematic view including the peripheral surrounding of one section of underground water pipe 103 in the utility water system is provided with an enclosed type isothermal room structure with internal helical isolation structure 240, wherein the two ends of the enclosed type isothermal room structure with internal helical isolation structure 240 are in enclosed form, one end close to the closed surface is installed with at least a fluid inlet 218, and fluid piping 221 passing to building 110 or internal space of closed or semi-closed structure, the other end is installed with at least a fluid outlet 219, and fluid piping 231 passing to building 110 or internal space of closed or semi-closed structure, in order to provide inlet or outlet gaseous or liquid fluid and metering device 251 and flow control valve 252 can be optionally installed as needed. Said fluid is convectively circulated by the cold-drop, hot-rise effect, or is installed with fluid pumping device 123 being driven by electric motor, or other mechanical power or manpower while adopting unidirectional pumping, the fluid of enclosed type isothermal room structure with internal helical isolation structure 240 to flow through fluid piping 221 passing to building 110 or internal space of closed or semi-closed structure, and passes through fluid piping 231 and return to the enclosed type isothermal room structure with internal helical isolation structure 240, thus when adopting periodic alternating flow pumping the flow of one of the pumping is as stated above while the other flow pumping flows through fluid piping 231 passing to building 110 or internal space of closed or semi-closed structure, then passes fluid piping 221 and return to the enclosed isothermal room structure 240 internally installed with helical isolation structure, in order to perform isothermal energy transfer to indirectly transfer thermal energy of utility water system and building 110 or internal space of closed or semi-closed structure. The above said fluid piping 221 and fluid piping 231 being individually connected to building 110 or internal space of closed or semi-closed structure, the fluid inlet and outlet of fluid piping 221 and fluid piping 231 can optionally install filtering device 124 as needed or not to be installed;
---- The control device 250: It is for the operation constituted by electromechanical components, solid state electronic components, or microprocessors and relevant software and operative control interfaces to operatively control the fluid pumping device 123;

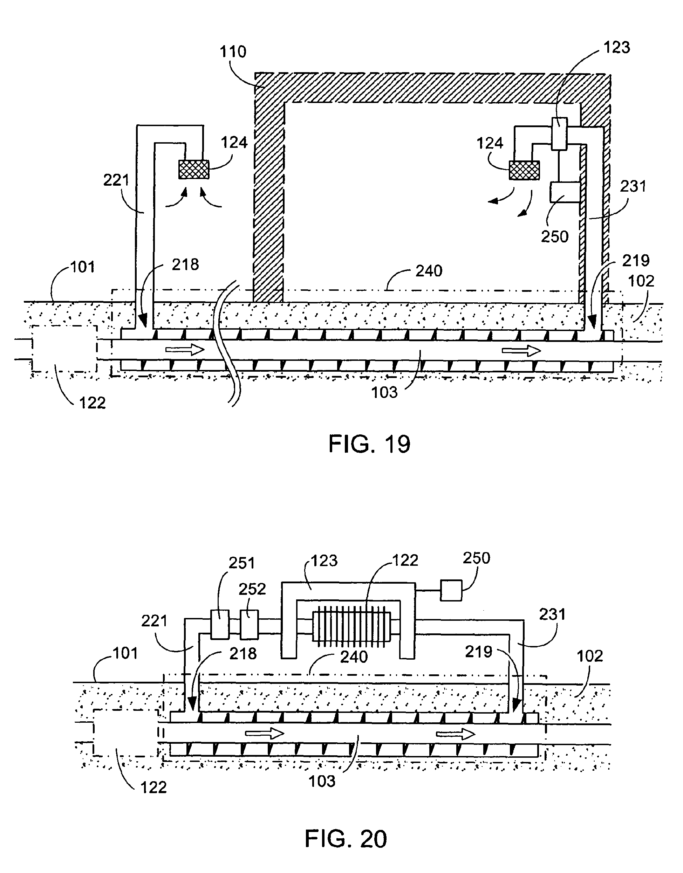

Fig. 19 is a schematic view of the system embodiment showing that the present invention is installed with enclosed type isothermal room structure with internal helical isolation structure so as to indirectly perform open pumping of fluid in the buildings or internal spaces of other closed or semi-closed structures by introducing fluid externally.

Fig. 19 is a schematic view including the peripheral surrounding of one section of underground water pipe 103 in the utility water system is provided with an enclosed type isothermal room structure with internal helical isolation structure 240, wherein the two ends of the enclosed type isothermal room structure with internal helical isolation structure 240 are in enclosed form, one end close to the closed surface is installed with at least a fluid inlet 218, and fluid piping 221 for connecting to outdoor space of the building, the other end is installed with at least a fluid outlet 219, for connecting to fluid piping 231 of building 110 or internal space of closed or semi-closed structure, in order to provide inlet or outlet gaseous or liquid fluid and metering device 251 and flow control valve 252 can be optionally installed as needed. Said fluid is convectively circulated by the cold-drop, hot-rise effect, or is installed with fluid pumping device 123 being driven by electric motor, or other mechanical power or manpower while adopting unidirectional pumping, thus pumping outdoor fluid or passing fluid piping 221, and passing through enclosed type isothermal room structure with internal helical isolation structure 240, and passing through fluid piping 231 to building 110 or internal space of closed or semi-closed structure, in order to perform the isothermal energy transfer to indirectly transfer warm energy of utility water system to building 110 or internal space of other closed or semi-closed structure. The above said fluid piping 221 being for connection to outdoor space, whereas fluid piping 231 being connected to building 110 or internal space of closed or semi-closed structure, the fluid inlet and outlet of fluid piping 221 and fluid piping 231 can optionally install filtering device 124 as needed or not to be installed;
---- The control device 250: It is for the operation constituted by electromechanical components, solid state electronic components, or microprocessors and relevant software and operative control interfaces to operatively control the fluid pumping device 123;

Fig. 20 is a schematic view of the system embodiment showing that the present invention is installed with enclosed type isothermal room structure with internal helical isolation structure so as to indirectly perform closed loop type fluid circulation for open space.

Fig. 20 is a schematic view including the peripheral surrounding of one section of underground water pipe 103 in the utility water system is provided with an enclosed type isothermal room structure with internal helical isolation structure 240, wherein the two ends of the enclosed type isothermal room structure with internal helical isolation structure 240 are in enclosed form, one end close to the closed surface is installed with at least a fluid inlet 218, and fluid piping 221 for connecting to outdoor space of the building, the other end is installed with at least a fluid outlet 219, for connecting to fluid piping 231 of open space, in order to provide inlet or outlet gaseous or liquid fluid and metering device 251 and flow control valve 252 can be optionally installed as needed. Said fluid is convectively circulated by the cold-drop, hot-rise effect, or is installed with fluid pumping device 123 being driven by electric motor, or other mechanical power or manpower while adopting unidirectional pumping, the fluid of enclosed type isothermal room structure with internal helical isolation structure 240 to flow through fluid piping 221 passing to isothermal device 122 in open space, and passes fluid piping 231 and return to the enclosed type isothermal room structure with internal helical isolation structure 240, thus when adopting periodic alternating flow pumping the flow of one of the pumping is as stated above while the other flow pumping flows through fluid piping 231 passing to isothermal device 122 in open space, and return to the enclosed type isothermal room structure with internal helical isolation structure 240 through fluid piping 221, in order to perform the isothermal energy transfer to indirectly transfer thermal energy through isothermal device 122 and open space. The above said fluid piping 221 and fluid piping 231 being individually connected to isothermal devices 122 installed in open spaces;
---- The control device 250: It is for the operation constituted by electromechanical components, solid state electronic components, or microprocessors and relevant software and operative control interfaces to operatively control the fluid pumping device 123;

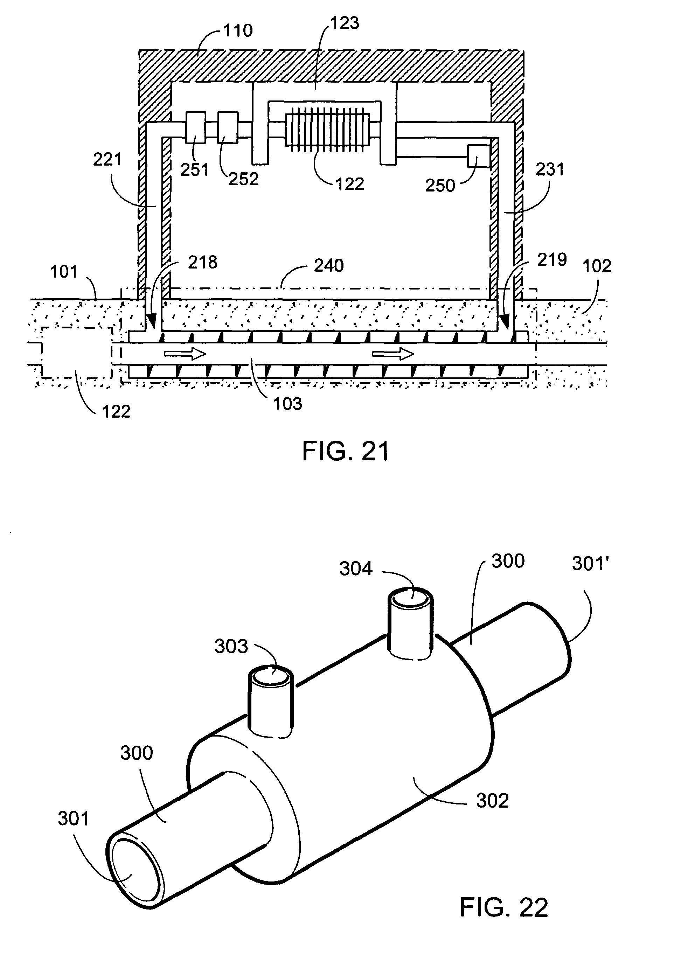

Fig. 21 is a schematic view of the system embodiment showing that the present invention is installed with enclosed type isothermal room structure with internal helical isolation structure so as to indirectly perform closed loop type fluid circulation in the buildings or internal space of other closed or semi-closed structure.

Fig. 21 is a schematic view including the peripheral surrounding of one section of underground water pipe 103 in the utility water system is provided with an enclosed type isothermal room structure with internal helical isolation structure 240, wherein the two ends of the enclosed type isothermal room structure with internal helical isolation structure 240 are in enclosed form, one end close to the closed surface is installed with at least a fluid inlet 218, and fluid piping 221 for connecting to building 110 or internal space of the closed or semi-closed structure, the other end is installed with at least a fluid outlet 219, for connecting to fluid piping 231 of building 110 or internal space of the closed or semi-closed structure, in order to provide inlet or outlet gaseous or liquid fluid and metering device 251 and flow control valve 252 can be optionally installed as needed. Said fluid is convectively circulated by the cold-drop, hot-rise effect, or is installed with fluid pumping device 123 being driven by electric motor, or other mechanical power or manpower while adopting unidirectional pumping, the fluid of enclosed type isothermal room structure with internal helical isolation structure 240 to flow through fluid piping 221 passing to isothermal device 122 in building 110 or internal space of the closed or semi-closed structure, and passes fluid piping 231 and return to the enclosed type isothermal room structure with internal helical isolation structure 240, thus when adopting periodic alternating flow pumping the flow of one of the pumping is as stated above while the other flow pumping flows through fluid piping 231 passing to isothermal device 122 in building 110 or internal space of the closed or semi-closed structure, and return to the enclosed type isothermal room structure with internal helical isolation structure 240 through fluid piping 221, in order to perform the isothermal energy transfer to indirectly transfer thermal energy through isothermal device 122 and building 110 or internal space of the closed or semi-closed structure. The above said fluid piping 221 and fluid piping 231 being individually connected to isothermal devices 122 installed in building 110 or internal space of the closed or semi-closed structure;
---- The control device 250: It is for the operation constituted by electromechanical components, solid state electronic components, or microprocessors and relevant software and operative control interfaces to operatively control the fluid pumping device 123;

The fluid pumping device 123 stated in the individual embodiment of the present invention can be consisted in one of the unidirectional pumping fluid pumping device or bilateral pumping fluid pumping device, wherein:
-- the installed fluid pumping device 123 has unidirectional pumping function, the method of installation is serially installed in the fluid circuit passing isothermal device 122, its pumping direction can be in the same or reverse direction as the flow of utility water of underground water pipe 103;
-- the installed fluid pumping device 123 has forward and reverse pumping function, serially installed in the flow circuit passing through isothermal device 122, its constituting methods include:
   (1) It is by adopting a bidirectional pumping fluid pump to suck and discharge the thermal fluid, wherein the flow direction of thermal fluid is periodically changed by periodically operating the pump in positive or reverse direction through the operative control of operative control device 250; or
   (2) It is constituted by two unidirectional pumps of different pumping directions in series connection, wherein they are respectively reversely parallel connected with the unidirectional valve for periodically alternatively pumping to periodically exchange the thermal fluid flow direction through the operative control of operative control device 250; or
   (3) It is constituted by two unidirectional pumps of different pumping directions in parallel connection making periodic alternative pumping to periodically exchange the thermal fluid flow directions through operative control of operative control device 250, wherein if the pumps has no static anti-reverse flow characteristics, they can be respectively series connected with a unidirectional valve to avoid reverse flow; therefore the two pumps of different pumping directions are alternatively pumped to periodically exchange the thermal fluid flow directions; or
   (4) It is constituted by a unidirectional flow pump and four controllable switch type fluid valves in bridge type combination, wherein thermal fluid flow direction is periodically changed by alternatively operatively control two fluid valves to open and the other two fluid valves to close through operative control of operative control device 250;

The timing for periodic change can be 1) the open loop type by presetting the operative control of direction-change period of thermal fluid flow, or 2) the closed loop type by detecting the temperature difference between the thermal fluid setting value and the one of thermal energy modulating target to operatively control the control of the direction-change period of thermal fluid flow.

Periodic alternating flow direction through passing the thermal energy fluid of thermal energy control target, in order to operatively control temperature difference distribution state between the thermal energy fluid and the target for operatively control of thermal energy;

In the present invention, the external thermal conductive casing of the piping for passing through supply water flow or liquid or gaseous state fluid of thermal energy is installed with a hollow enclosure having at least two thermal conducting fluid inlet and outlet ports, wherein the hollow enclosure is for passing through thermal conducting fluid including gas or liquid in order to constitute enclosure type piping fluid thermal energy transfer device, thereby transferring the heat of fluid to the thermal conducting fluid of the hollow enclosure, and further can be provided to the gaseous or liquid state fluid having thermal energy storage capability, flowing through piping on the enclosure type piping fluid thermal energy transfer device, and to perform thermal energy isothermal transfer of gaseous or liquid state fluid passing through piping between external and enclosed body;

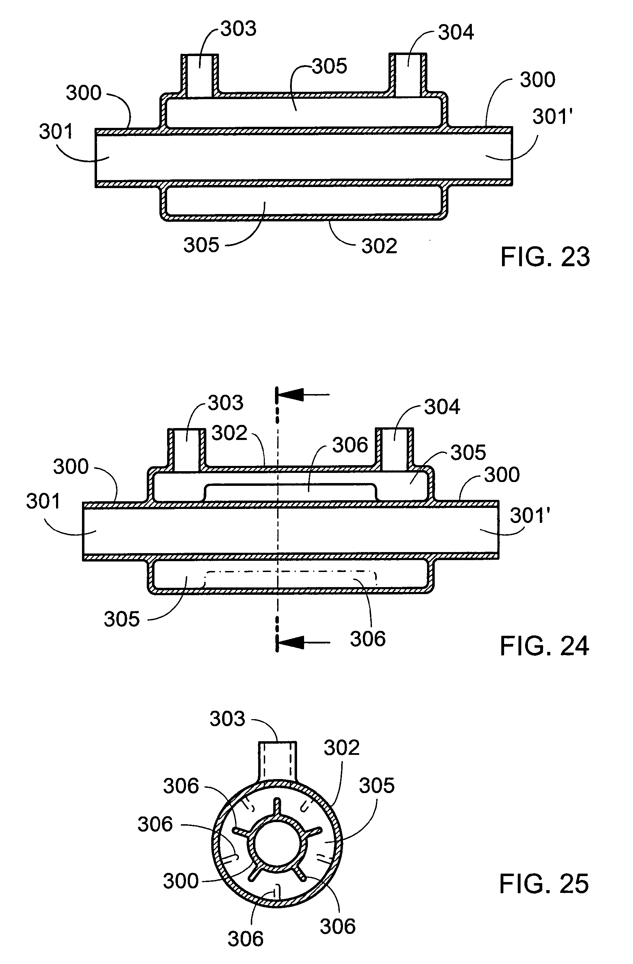

Fig. 22 is a 3D structural schematic view of the enclosure type piping fluid thermal energy transfer device of the present invention adopting isothermal method and device using utility water thermal energy. Fig. 23 is a cross-sectional view of Fig. 22. As shown by the structure of the enclosure type piping fluid thermal energy transfer device of the present invention adopting isothermal method and device using utility water thermal energy shown in Figs. 22 & 23, the external thermal conductive casing of the piping for passing supply water flow or liquid or gaseous fluid of thermal energy having at least one fluid inlet and at least one fluid outlet is installed with a hollow enclosure, wherein besides that the internal space of the hollow structure for passing through conducting fluid is made with at least two inlet and outlet ports, it appear a hollow closed structure to enclose the piping casing and mainly comprises the following:
---- The piping 300: It is of the tubular structure in the shape of straight line or curve or close to circle or helical or selected shape, having at least one fluid inlet 301 and at least one fluid outlet 301' for passing through water flow, liquid or gas flow of thermal energy, and having a pipe casing being made of thermal conductive material for transferring heat to the thermal conducting fluid inside hollow enclosure 302, wherein number of enclosed piping 300 can be optionally selected as needed;
---- The hollow enclosure 302: It is used for enclosing the piping casing being made of thermal conductive or non-conductive material, wherein besides of that the hollow enclosure having internal space 305 for passing through thermal conducting fluid is made with at least two thermal conducting fluid inlet and outlet ports, it appear a hollow closed structure to enclose the piping casing, wherein number of hollow enclosures 302 can be optionally selected as needed;
---- The thermal conducting fluid inlet and outlet ports 303, 304: It is for discharging or receiving thermal conducting fluid and for transferring the thermal energy of thermal conducting fluid inside hollow enclosure 302 received from the supply water flow or liquid or gaseous state fluid inside piping 300 to the outside target, wherein number of thermal conducting fluid inlet and outlet ports 303, 304 can be optionally selected as needed;
---- The internal space 305 of the hollow enclosure: It is the space formed between hollow enclosure 302 and casing of piping 300 for passing through thermal conducting fluid;

In addition, for promoting the performance of transferring the thermal energy of supply water flow or liquid or gaseous state fluid inside piping 300 to thermal fluid inside hollow enclosure, the portion of said casing of piping 300 being enclosed by hollow enclosure 302 in contact with thermal conducting fluid can be further installed with thermal conducting fin structure 306 to increase the heat transfer area thereby benefiting the thermal energy transfer to thermal conducting fluid, wherein the interior of hollow enclosure 302 can be optionally installed with or not installed with thermal conducting fin 306 as needed.

Fig. 24 is a structural schematic view of the present invention showing that the portion of piping casing being enclosed by the hollow enclosure in contact with thermal conducting fluid is additionally installed with thermal conducting fin structure.

Fig. 25 is a cross-sectional view of Fig. 24.

The isothermal method and device using utility water thermal energy adopts embodying methods for the enclosure type piping fluid thermal energy transfer device include 1) An integral structure by casing or welding, 2) a combined structure.

The isothermal method and device using utility water thermal energy adopts the piping structure in the whole structure of said enclosure type piping fluid thermal energy transfer device, or part of the structure of the piping, shall be made of material having thermal conductivity such as cast iron, aluminum, copper, stainless steel, or thermal conductive material for easy thermal energy transfer.

In practical applications of the isothermal method and device using utility water thermal energy adopts enclosure type piping fluid thermal energy transfer device, for use in thermal energy transfer of thermal energy target object or target space of all kinds of heat storage body, the number of enclosed pipes can be one or more than one, and number of hollow structures for enclosing pipes can also be one or more than one.

The enclosure type piping fluid thermal energy transfer device can be used for the operation of one or more than one functions listed below:
1. For use in the gaseous or liquid fluid passing pipe having thermal energy, and the transfer of thermal energy of piping, in order for isothermal transfer of isothermal space or gaseous or liquid fluid of target;
2. For use in sending gaseous or liquid external fluid having thermal energy reversely, and perform isothermal transfer of thermal energy to the gaseous or liquid fluid in the piping through thermal energy transfer of piping.

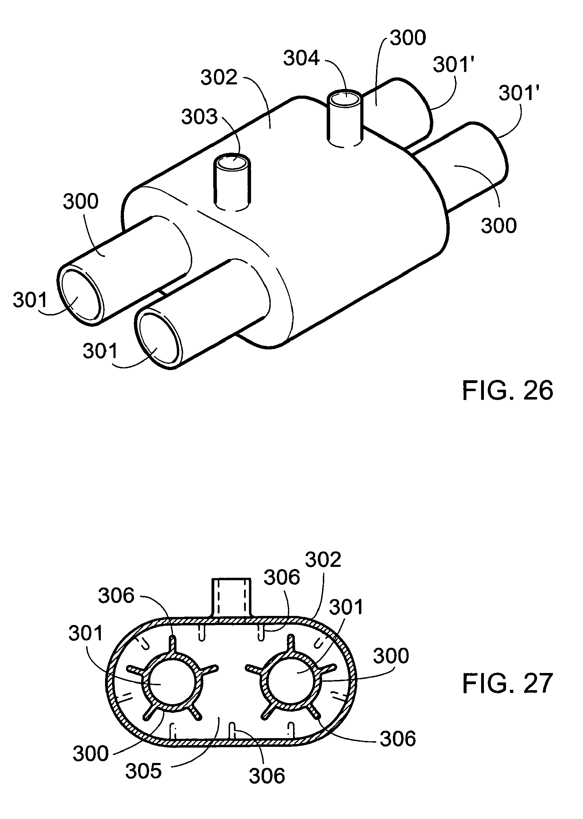

Fig. 26 is a schematic view of the embodiment of the present invention showing two pipes being enclosed by the hollow structure.

Fig. 27 is a cross-sectional view of Fig. 26.

Beside of the application for thermal energy transfer of the fluid inside piping and the hollow enclosure 302, the isothermal method and device using utility water thermal energy adopts enclosure type piping fluid thermal energy transfer device having the following applications:
1. The application of that the piping 300 is passed through with gaseous or liquid state fluid for transferring heat to the gaseous or liquid state fluid inside hollow enclosure 302;
2. The application of that gaseous or liquid state fluid of thermal energy is reversely sent from outside to hollow enclosure 302 via the thermal conducting fluid inlet and outlet ports 303, 304 for transferring heat to gaseous or liquid state fluid inside piping 300.

The isothermal conduction of the fluid among fluids of the present invention can be a kind of conducting type inter-piping fluid thermal energy transfer device. The conducting type inter-piping fluid thermal energy transfer device has at least a first piping and at least a second piping, the first piping and the second piping are installed separately, and thermal conducting structure is installed between the first piping and the second piping, wherein the first piping is for passing water supply flow or gaseous or liquid fluid having thermal energy, the second piping is also for passing water supply flow or other liquid or gaseous heat conduction fluid, and the thermal conducting structure is used for the thermal energy of the water supply flow or other liquid or gaseous fluid in the first piping to provide isothermal thermal energy transfer to the gaseous or liquid fluid in the second piping, and further for the application of providing the gaseous or liquid fluid with heat storage energy to flow through the first piping of the conducting type inter-piping fluid thermal energy transfer device and through the thermal conducting structure of the gaseous or liquid fluid of the second piping to perform isothermal thermal energy transfer.

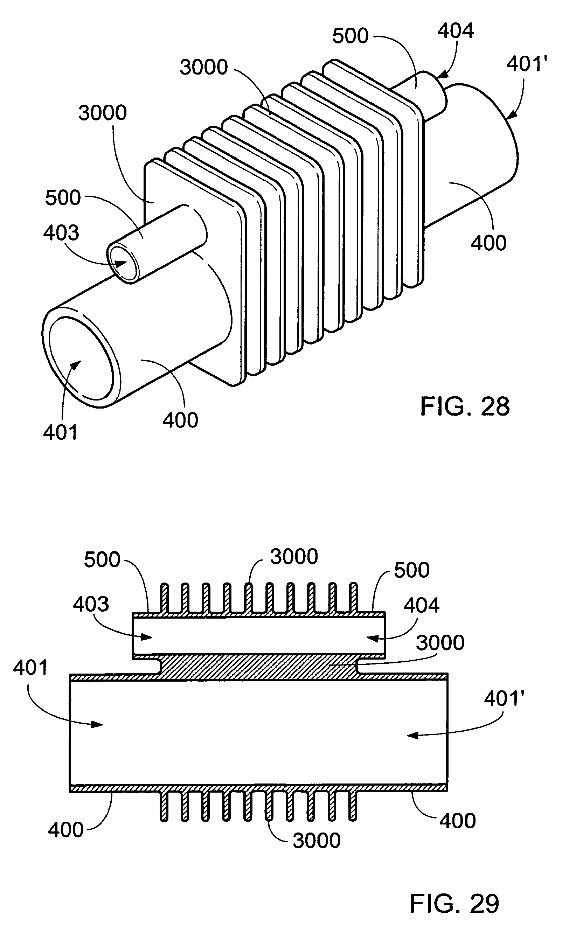

Fig. 28 is a 3D structural schematic view of the isothermal method and device using utility water thermal energy adopting conducting type inter-piping fluid thermal energy transfer device of the present invention, and Fig. 29 is a cross-sectional view of Fig. 28.

As shown in Fig. 28 & 29, the isothermal method and device using utility water thermal energy adopting conducting type inter-piping fluid thermal energy transfer device mainly comprises the following:
---- The first piping 400: It is of the straight line or curve line or near circle or helical sharp or selected geometrical shape tubular structure having at least one fluid inlet 401 and at least one fluid outlet 401' for passing through water flow, or liquid or gas state fluid of thermal energy, and having a pipe casing being made of thermal conductive material for transferring heat to internal water flow or liquid or gaseous state thermal conductive fluid inside second pipe casing being made of thermal conductive material via thermal conducting structure 3000, wherein number of first piping 400 can be optionally selected as needed;
---- The second piping 500: It is of the straight line or curve line or near circle or helical sharp or selected geometrical shape tubular structure having at least two thermal conductive fluid inlet and outlet 403, 404 for passing through supply water flow, or liquid or gas state fluid of thermal energy for transferring isothermal energy to internal water flow or liquid or gaseous state thermal conductive fluid inside first pipe casing via casing of second piping 500 itself being made of thermal conductive material, thermal conducting structure 3000 , and the first pipe 400 casing being made of thermal conductive material, wherein number of first piping 500 can be optionally selected as needed;
---- The thermal conducting structure 3000: It is made of good thermal conductive material and is connected between first piping 400 and second piping 500 for isothermally transferring the heat between supply water flow or gaseous or liquid state fluid of thermal energy passing through first piping 400 and water flow or gaseous or liquid state fluid inside second piping 500 via thermal conductive casing of first piping 400, thermal conducting structure 3000 and thermal conductive casing of second piping 500;
---- The thermal conductive fluid inlet and outlet 403, 404: It is for discharging or receiving thermal conducting fluid and for transferring the thermal energy of thermal conducting fluid inside second piping 500 received from the supply water flow or liquid or gaseous state fluid inside first piping 400 to the outside target, wherein number of thermal conducting fluid inlet and outlet 403, 404 can be optionally selected as needed.

In addition, for promoting the performance of transferring heat of supply water flow or liquid or gaseous state fluid inside first piping 400 to thermal fluid inside second piping 500, interior of said first piping 400 is further additionally made with heat conducting fins 406 at the locations thereof near to thermal conducting structure 3000 to increase the heat transfer area, thereby allowing the heat of supply water or gaseous or liquid state fluid of thermal energy to water flow or gaseous or liquid state thermal conductive fluid inside second piping 500 via heat conducting fins 406 inside first piping 400, thermal conductive pipe casing of first piping itself, thermal conducting structure 3000, and thermal conductive casing of second piping 500 being internally made with heat conducting fins 406 at the locations thereof near to thermal conducting structure 3000.

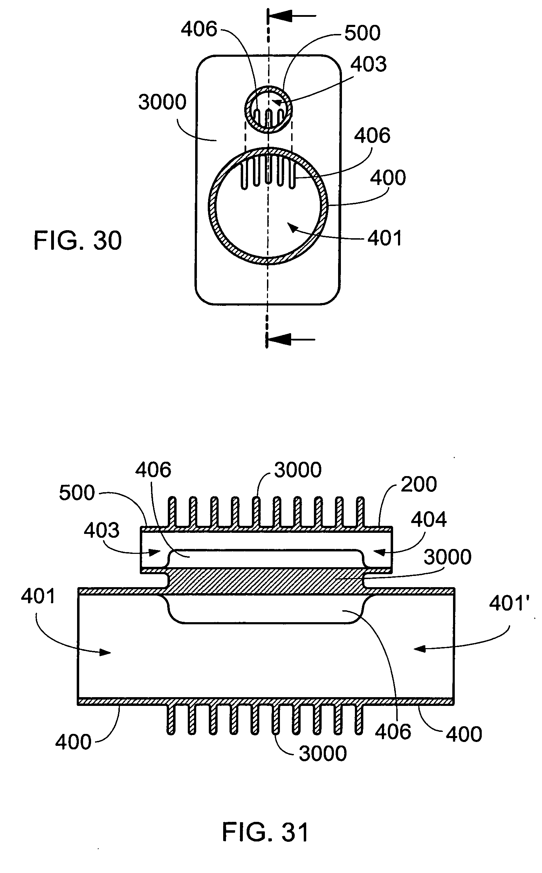

Fig. 30 is a structural schematic view of the present invention showing that interior of first piping and second piping are additionally made with heat conducting fins at the locations thereof near to thermal conducting structure.

Fig. 31 is a cross-section view of Fig. 30.

The isothermal method and device using utility water thermal energy adopting embodying methods for the conducting type inter-piping fluid thermal energy transfer device include 1) an integral structure by casting or welding, 2) a combined structure.

The isothermal method and device using utility water thermal energy adopting the whole structure of above said conducting type inter-piping fluid thermal energy transfer device is made of thermal conductive material such as cast iron, aluminum, copper, stainless steel, or made by thermal conductive material favorable for thermal energy transfer.

The isothermal method and device using utility water thermal energy adopting the conducting type inter-piping fluid thermal energy transfer device in practical application, for providing thermal energy transfer of target object or target space of all kinds of application in heat storage body, the number of first piping 400 can be one or more than one, and number of second piping 500 being connected to first piping 400 via thermal conducting structure 3000 can also be one or more than one.

The conducting type inter-piping fluid thermal energy transfer device can be used for the operation of one or more than one functions listed below:
1. For use in the gaseous or liquid fluid passing pipe having thermal energy, and the transfer of thermal energy of piping, in order for isothermal transfer of isothermal space or gaseous or liquid fluid of target;
2. For use in sending gaseous or liquid external fluid having thermal energy reversely, and perform isothermal transfer of thermal energy to the gaseous or liquid fluid in the piping through thermal energy transfer of piping.

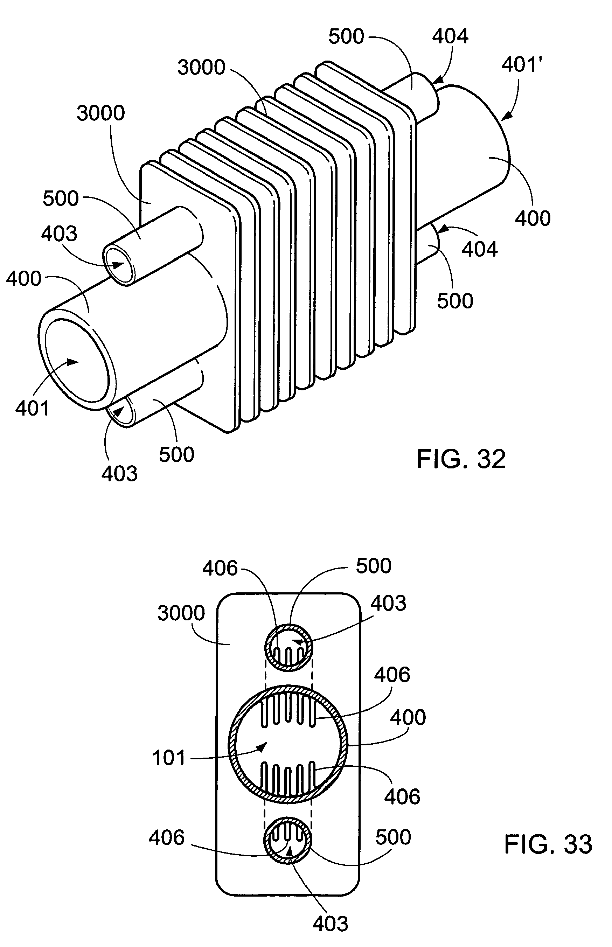

Fig. 32 is a schematic view of the embodiment of the present invention showing that two second piping are connected to the first piping via thermal conducting structure 3000.

Fig. 33 is a cross-sectional view of Fig. 32.

The present invention can further at the external thermal conductive casing of the piping for passing through supply water flow or liquid or gaseous state fluid of thermal energy install a pipe enclosure structure with internal helical fluid flowing circuit, for helical isolation structure and pipe enclosure structure and pipe to form helical pipe as the pipe in fluid thermal energy transfer device, wherein the pipe enclosure structure having at least two thermal conducting fluid inlet and outlet ports for passing through thermal conducting fluid including gas or liquid, thereby transferring the heat of utility water flow to the thermal conducting fluid in the helical fluid flowing circuit and further for providing the application in all kinds of gaseous or liquid fluid having storage heat, flowing through the piping of helical isolation structure and pipe enclosure structure and pipe to form helical pipe as the pipe in fluid thermal energy transfer device, and for performing isothermal thermal energy transfer flowing through gaseous or liquid state fluid of helical pipe;

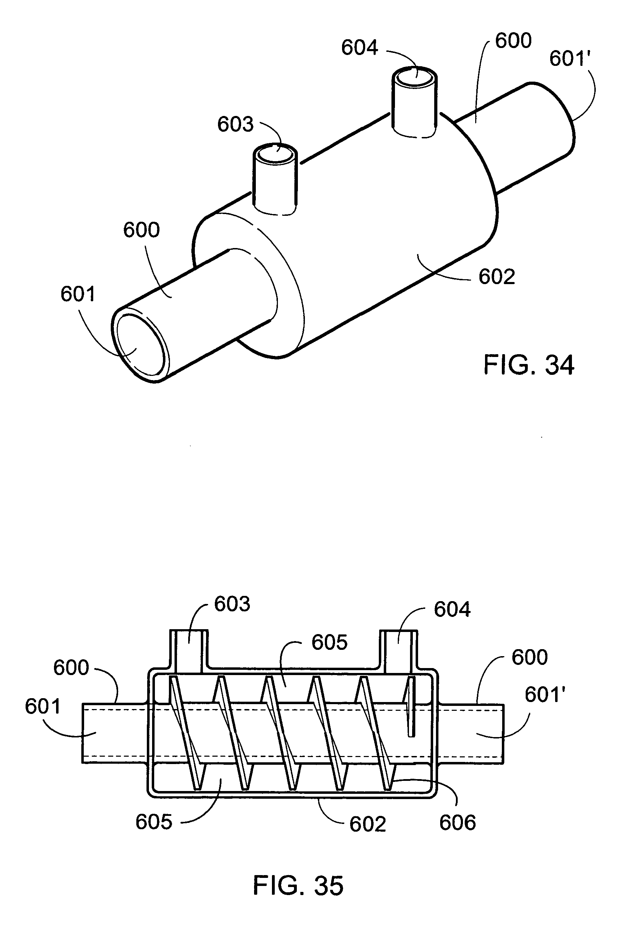

Fig. 34 is a 3D structural schematic view of the helical isolation structure and pipe enclosure structure and pipe to form helical pipe as the pipe in fluid thermal energy transfer device of the present invention. Fig. 35 is a cross-sectional view of Fig. 34.

The structures shown in the schematics of Fig. 34 and Fig. 35 are the helical isolation structure and pipe enclosure structure and pipe to form helical pipe as the pipe in fluid thermal energy transfer device of the present invention; their major constituents are as shown below:
---- The piping 600: It is of the straight line or curve line or close to circle or helical shape or selected geometrical shape tubular structure having at least one fluid inlet 601 and at least one fluid outlet 601' for passing through water flow, liquid or gas flow of thermal energy, the external of pipe 600 is installed with helical isolation structure 606, the external of the helical isolation structure 606 is installed with enclosure structure 602, the helical pipe space 605 formed by the helical isolation structure 606 and piping 600 and pipe enclosure structure 602, as helical pipe fluid flowing circuit for passing through thermal conduction fluid, in addition to at least two thermal fluid inlet and outlet 603 and 604 installed on the pipe enclosure structure, both ends is showing enclosed pipe structure, and jointly surrounding the pipe casing with the helical isolation structure 606; and through the thermal conducting action of the pipe casing, to the thermal conduction thermal energy transfer fluid inside helical pipe space 605, the number of enclosed piping 600 can be optionally selected as needed;
---- The pipe enclosure structure 602: It is used for enclosing the casing of piping 600 made of thermal conductive or non-conductive material, wherein besides of that the helical isolation structure 606 installed between the pipe enclosure structure 602 and piping 600 for the interior to form helical pipe space 605 as helical pipe fluid flowing circuit for passing through thermal conducting fluid, the pipe enclosure structure is installed with at least two thermal conducting fluid inlet and outlet ports 603 and 604 for providing inlet or outlet of heat conduction fluid, wherein the number of pipe enclosure structure 602 can be optionally selected as needed;
---- The thermal conducting fluid inlet and outlet ports 603, 604: It is for discharging or receiving thermal conducting fluid in order for the internal thermal conducting fluid of helical piping space 605 to receive the supply water flow or liquid or gaseous state fluid inside piping 600 and transfers to the outside target object or target space, wherein number of thermal conducting fluid inlet and outlet ports 603, 604 can be optionally selected as needed;
---- The internal helical piping space 605 of the pipe enclosure structure 602: It is the space formed between the helical isolation structure 606 and outer casing of piping 600 and enclosing pipe 602 for forming helical space for passing through thermal conducting fluid;

The isothermal method and device using utility water thermal energy adopting the helical isolation structure and pipe enclosure structure and pipe to form helical pipe as the pipe in fluid thermal energy transfer device and piping can be applied to provide all kinds of gaseous or liquid fluid for heat storage, flowing through helical isolation structure and pipe enclosure structure and pipe to form helical pipe as the pipe in fluid thermal energy transfer device, and for the isothermal thermal energy transfer of gaseous or liquid fluid flowing through helical pipe, the piping in practical application can be one or more than one, and there can also be one or more than one helical isolation structure and pipe enclosure structure and pipe to form helical pipe as the pipe in fluid thermal energy transfer device.

The helical isolation structure and pipe enclosure structure and pipe to form helical pipe as the pipe in fluid thermal energy transfer device can be used for the operation of one or more than one function listed below:
1. For use in the gaseous or liquid fluid passing pipe having thermal energy, and the transfer of thermal energy of piping, in order for isothermal transfer of isothermal space or gaseous or liquid fluid of target;
2. For use in sending gaseous or liquid external fluid having thermal energy reversely, and perform isothermal transfer of thermal energy to the gaseous or liquid fluid in the piping through thermal energy transfer of piping.

The enclosure type piping fluid thermal energy transfer device in Fig. 22∼27 stated above and the conducting type inter-piping fluid thermal energy transfer device stated in Fig. 28, and helical isolation structure and pipe enclosure structure and pipe to form helical pipe as the pipe in fluid thermal energy transfer device stated in Fig. 34∼35, in addition to the isothermal method and device of utility water thermal energy of the present invention, can also be used in all kinds of heat storage applications of thermal energy of target object or target space for isothermal adjustment of thermal energy transfer.

## Claims

1. The isothermal method and device using utility water thermal energy, the water inside underground water pipe buried under earth layers in the utility water system being used as the thermal energy transfer fluid having its thermal energy is directly transferred or indirectly transferred by thermal transfer method to the thermal energy fluid of another closed piping circuit or open piping circuit; further, the thermal energy transfer fluid is pumped by the pump for unidirectional or periodic flow direction change to enter the target object or target space intended to transfer the thermal energy pumped from thermal energy transfer fluid indirectly by isothermal device so as to transfer thermal energy target or target space thereby saving energy consumption by replacing or providing assistances to conventional high energy consuming devices;
The isothermal effect function using isothermal method and device using utility water thermal energy includes one or more than one effective functions shown below:
1) Use utility water and underground thermal energy of relatively lower temperature to reduce the temperature of the target for transfer on earth surface;
2) Use utility water and underground thermal energy of relatively higher temperature to increase the temperature of the target for transfer on earth surface;
The isothermal method and device using utility water thermal energy includes one or more than one of the application devices in the range listed below for use in target object or target space of isothermal action in order to transfer thermal energy for isothermal adjustment; the target object or target space for isothermal action includes:
-- wherein the target for isothermal action includes one or more than one application devices listed below:
1) tooling machine, inspection apparatus, monitoring apparatus, industrial equipment, machinery equipment, dynamo machinery, or electro machinery equipment setup having specific environmental temperature requirement;
2) heat dissipation device, electricity storage device, lamp, LED, solar energy generation device, computer, computer peripheral, server, or semiconductor application equipment having heat loss device or component heat dissipation requirement;
3) space or warehouse, etc. for storing solid, liquid, or gas chemicals.
The cooling equipment device using natural thermal energy of utility water system, or the thermal retaining equipment for isothermal action using natural thermal energy of utility water system.
-- wherein the target space for isothermal action contains one or more than one spaces listed below including:
1) internal space of semi-closed or closed building;
2) internal space of semi-closed or closed structure;
3) shallow layer of earth surface;
4) all types of open space;
5) open earth surface space.
The isothermal target building for isothermal method and device using utility water thermal energy includes target for isothermal adjustment of thermal energy transfer in all kinds of housing, warehouse, or pillar body, or building of other geometrical shape, or dedicated building (e.g. booth) constitute of semi-closed or closed structure which require design for isothermal adjustment thermal energy transfer; or for the use of isothermal transfer such as highway shallow layer of earth surface, or for application in isothermal transfer in exposed type open air public area.

2. The isothermal method and device using utility water thermal energy stated in claim 1 includes the water pipe using utility water piping constituting diversion closed piping and fluid pump and the isothermal device constituting the system structure of isothermal function in the building, it mainly comprises that:
---- The underground water pipe (103): It is buried under earth layer (102) for transferring utility water system water flow, wherein underground water pipe (103) can be constituted by conventional tubular structure, or geometric shaping structures favorable for thermal transfer, and made of various good thermal conductive materials such as metal or other thermal conductive materials thereby allowing utility water to flow through and to rely on underground water pipe (103) to transfer earth layer thermal energy; further underground water pipe (103) can be optionally series connected with an isothermal device (122) as needed to enhance earth layer thermal energy transfer effect;
---- The closed water pipe (121): The closed water pipe (121) itself can be made of conventional tubular structure, or geometrical structures and materials favorable for thermal energy transfer to appear single flow circuit or multi-flow circuits or closed flow circuit in particular bended shape, wherein it is installed at the location closer to earth surface (101) than underground water pipe (103), or at the location to expose out of the earth surface (101), or is buried inside the building (110) itself, or is installed at selected spaces near to the top, wall, interior of floor, or near to the ground or near to the siding in the interior or exterior of the building, wherein inlet of closed water pipe (121) is connected with underground water pipe (103) to introduce water flow from underground water pipe (103) and the outlet end of closed water pipe (121) is connected with another section of underground water pipe (103) to return water flow back to underground water pipe (103) thereby constituting the water flow circuit for isothermal energy transfer through water flow; further, the closed water pipe (121) can be optionally series connected with isothermal device (122) and installed with the fluid pumping device (123) as needed, and can be optionally installed with metering device (251)and flow control valve (252) as needed;
---- The isothermal device (122): The isothermal device (122) being made of good thermal conductive material has a geometric structure shape favorable for thermal transfer; the isothermal device (122) having a flow inlet, internal flow circuit thereof and flow outlet is series connected with underground water pipe (103) or series connected with closed water pipe (121) inside building (110) for isothermally transferring the thermal energy of passing water flow with the peripheral thermal energy of isothermal device (122); the device can be optionally installed as needed to series connect with both or one of the underground water pipe (103), or closed water pipe (121) inside building (110), or it can be optionally selected not to be installed;
---- The fluid pumping device (123): It is used for fluid pumping device that is serially connected to fluid piping through isothermal device (122) in order to generate pumping power for pumping water flow to transfer thermal energy, wherein the pump can be driven by electric motor, engine power, or mechanical or electric power converted from other wind power, thermal energy, temperature-difference energy, or solar energy, etc.;
---- The control device (250): It is for the operation constituted by electromechanical components, solid state electronic components, or microprocessors and relevant software and operative control interfaces to operatively control the fluid pumping device (123);

3. The isothermal method and device using utility water thermal energy stated in claim 1, wherein the isothermal function system being applied for shallow earth surface layer with the following constituents:
---- The underground water pipe (103): It is buried under earth layer (102) for transferring utility water system water flow, wherein underground water pipe (103) can be constituted by conventional tubular structure, or geometric shaping structures favorable for thermal transfer, and made of various good thermal conductive materials such as metal or other thermal conductive materials thereby allowing utility water to flow through and to rely on underground water pipe (103) to transfer earth layer thermal energy, further underground water pipe (103) can be optionally series connected with an isothermal device (122) as needed to enhance earth layer thermal energy transfer effect;
---- The closed water pipe (121): The closed water pipe (121) itself can be made of conventional tubular structure, or geometrical structures and materials favorable for thermal energy transfer to appear single flow circuit or multi-flow circuits or closed flow circuit in particular bended shape, wherein it is installed on the top of building (110) to appear an externally exposed closed water flow circuit, wherein inlet of closed water pipe (121) is connected with underground water pipe (103) to introduce water flow from underground water pipe (103) and the outlet end of closed water pipe (121) is connected with another section of underground water pipe (103) to return water flow back to underground water pipe (103) thereby constituting the water flow circuit for isothermal energy transfer through water flow; further, the closed water pipe (121) can be optionally series connected with isothermal device (122) and installed with the fluid pumping device (123) as needed, and can be optionally installed with metering device (251) and flow control valve (252) as needed;
---- The isothermal device (122): The isothermal device (122) being made of good thermal conductive material has a geometric structure shape favorable for thermal transfer; the isothermal device (122) having a flow inlet, internal flow circuit thereof and flow outlet is series connected with underground water pipe (103) or series connected with the externally exposed closed water pipe (121) on the top of building (110) for isothermally transferring the thermal energy of passing water flow with the peripheral thermal energy of isothermal device (122); the device can be optionally installed as needed to series connect with both or one of the underground water pipe (103), or the externally exposed closed water pipe (121) on the top of building (110), or it can be optionally selected not to be installed;
---- The fluid pumping device (123): It is used for fluid pumping device that is serially connected to fluid piping through isothermal device (122) in order to generate pumping power for pumping water flow to transfer thermal energy, wherein the pump can be driven by electric motor, engine power, or mechanical or electric power converted from other wind power, thermal energy, temperature-difference energy, or solar energy, etc.;
---- The control device (250): It is for the operation constituted by electromechanical components, solid state electronic components, or microprocessors and relevant software and operative control interfaces to operatively control the fluid pumping device (123);

4. The isothermal method and device using utility water thermal energy stated in claim 1, wherein the isothermal function system for application in exposed earth surface target has the following major constituents:
---- The underground water pipe (103): It is buried under earth layer (102) for transferring utility water system water flow, wherein underground water pipe (103) can be constituted by conventional tubular structure, or geometric shaping structures favorable for thermal transfer, and made of various good thermal conductive materials such as metal or other thermal conductive materials thereby allowing utility water to flow through and to rely on underground water pipe (103) to transfer earth layer thermal energy, further underground water pipe (103) can be optionally series connected with an isothermal device (122) as needed to enhance earth layer thermal energy transfer effect;
---- The closed water pipe (121): The closed water pipe (121) itself can be made of conventional tubular structure, or geometrical structures and materials favorable for thermal energy transfer to appear single flow circuit or multi-flow circuits or closed flow circuit in particular bended shape, wherein it is installed at the location to expose out of earth surface layer (101) to appear closed water flow circuit, wherein inlet of closed water pipe (121) is connected with underground water pipe (103) to introduce water flow from underground water pipe (103) and the outlet end of closed water pipe (121) is connected with another section of underground water pipe (103) to return water flow back to underground water pipe (103) thereby constituting the water flow circuit for isothermal thermal energy transfer through water flow; further, the closed water pipe (121) can be optionally series connected with isothermal device (122) and installed with the fluid pumping device (123) as needed, and can be optionally installed with metering device (251) and flow control valve (252) as needed;
---- The isothermal device (122): The isothermal device (122) being made of good thermal conductive material has a geometrical structure shape favorable for thermal transfer; the isothermal device (122) having a flow inlet, internal flow circuit thereof and flow outlet is series connected with underground water pipe (103) or series connected with closed water pipe (121) for isothermally transferring the thermal energy of passing water flow with the peripheral thermal energy of isothermal device (122); the device can be optionally installed as needed to series connect with both or one of the underground water pipe (103), or closed water pipe (121) being exposed out of earth surface, or it can be optionally selected not to be installed;
---- The fluid pumping device (123): It is used for fluid pumping device that is serially connected to fluid piping through isothermal device (122) in order to generate pumping power for pumping water flow to transfer thermal energy, wherein the pump can be driven by electric motor, engine power, or mechanical or electric power converted from other wind power, thermal energy, temperature-difference energy, or solar energy, etc.;
---- The control device (250): It is for the operation constituted by electromechanical components, solid state electronic components, or microprocessors and relevant software and operative control interfaces to operatively control the fluid pumping device (123).

5. The isothermal method and device using utility water thermal energy stated in claim 1, wherein the isothermal function system for application in the interior of structural body at the top of the building has the following major constituents:
---- The underground water pipe (103): It is buried under earth layer (102) for transferring utility water system water flow, wherein underground water pipe (103) can be constituted by conventional tubular structure, or geometric shaping structures favorable for thermal transfer, and made of various good thermal conductive materials such as metal or other thermal conductive materials thereby allowing utility water to flow through and to rely on underground water pipe (103) to transfer earth layer thermal energy, further underground water pipe (103) can be optionally series connected with an isothermal device (122) as needed to enhance earth layer thermal energy transfer effect;
---- The closed water pipe (121): The closed water pipe (121) itself can be made of conventional tubular structure, or geometrical structures and materials favorable for thermal energy transfer to appear single flow circuit or multi-flow circuits or closed flow circuit in particular bended shape, wherein it is installed inside the top structure of building (110) to appear a closed water flow circuit, wherein inlet of closed water pipe (121) is connected with underground water pipe (103) to introduce water flow from underground water pipe (103) and the outlet end of closed water pipe (121) is connected with another section of underground water pipe (103) to return water flow back to underground water pipe (103) thereby constituting the water flow circuit for isothermal energy transfer through water flow; further, the closed water pipe (121) can be optionally series connected with isothermal device (122) and installed with the fluid pumping device (123) as needed, and can be optionally installed with metering device (251) and flow control valve (252) as needed;
---- The isothermal device (122): The isothermal device (122) being made of good thermal conductive material has a geometrical structure shape favorable for thermal transfer; the isothermal device (122) having a flow inlet, internal flow circuit thereof and flow outlet is series connected with underground water pipe (103) or series connected with closed water pipe (121) for isothermally transferring the thermal energy of passing water flow with the peripheral thermal energy of isothermal device (122); the device can be optionally installed as needed to series connect with both or one of the underground water pipe (103), or closed water pipe (121) inside the top structure of building (110), or it can be optionally selected not to be installed;
---- The fluid pumping device (123): It is used for fluid pumping device that is serially connected to fluid piping through isothermal device (122) in order to generate pumping power for pumping water flow to transfer thermal energy, wherein the pump can be driven by electric motor, engine power, or mechanical or electric power converted from other wind power, thermal energy, temperature-difference energy, or solar energy, etc.;
---- The control device (250): It is for the operation constituted by electromechanical components, solid state electronic components, or microprocessors and relevant software and operative control interfaces to operatively control the fluid pumping device (123).

6. The isothermal method and device using utility water thermal energy started in claim 1, wherein the isothermal function system for application in exposed portion at the top of the building has the following major constituents:
---- The underground water pipe (103): It is buried under earth layer (102) for transferring utility water system water flow, wherein underground water pipe (103) can be constituted by conventional tubular structure, or geometric shaping structures favorable for thermal transfer, and made of various good thermal conductive materials such as metal or other thermal conductive materials thereby allowing utility water to flow through and to rely on underground water pipe (103) to transfer earth layer thermal energy, further underground water pipe (103) can be optionally series connected with an isothermal device (122) as needed to enhance earth layer thermal energy transfer effect;
---- The closed water pipe (121): The closed water pipe (121) itself can be made of conventional tubular structure, or geometrical structures and materials favorable for thermal energy transfer to appear single flow circuit or multi-flow circuits or closed flow circuit in particular bended shape, wherein it is installed on the top of building (110) to appear an externally exposed closed water flow circuit, wherein inlet of closed water pipe (121) is connected with underground water pipe (103) to introduce water flow from underground water pipe (103) and the outlet end of closed water pipe (121) is connected with another section of underground water pipe (103) to return water flow back to underground water pipe (103) thereby constituting the water flow circuit for isothermal energy transfer through water flow; further, the closed water pipe (121) can be optionally series connected with isothermal device (122) and installed with the fluid pumping device (123) as needed, and can be optionally installed with metering device (251) and flow control valve (252) as needed;
---- The isothermal device (122): The isothermal device (122) being made of good thermal conductive material has a geometric structure shape favorable for thermal transfer; the isothermal device (122) having a flow inlet, internal flow circuit thereof and flow outlet is series connected with underground water pipe (103) or series connected with the externally exposed closed water pipe (121) on the top of building (110) for isothermally transferring the thermal energy of passing water flow with the peripheral thermal energy of isothermal device (122); the device can be optionally installed as needed to series connect with both or one of the underground water pipe (103), or the externally exposed closed water pipe (121) on the top of building (110), or it can be optionally selected not to be installed;
---- The fluid pumping device (123): It is used for fluid pumping device that is serially connected to fluid piping through isothermal device (122) in order to generate pumping power for pumping water flow to transfer thermal energy, wherein the pump can be driven by electric motor, engine power, or mechanical or electric power converted from other wind power, thermal energy, temperature-difference energy, or solar energy, etc.;
---- The control device (250): It is for the operation constituted by electromechanical components, solid state electronic components, or microprocessors and relevant software and operative control interfaces to operatively control the fluid pumping device (123);

7. The isothermal method and device using utility water thermal energy started in claim 1, wherein the isothermal device (122) can select one or more than one embodiments listed below. Each of the embodiment is as shown below:
1) The isothermal device is installed in the underground layer to series connect with underground water pipe;
2) The isothermal device is installed near to earth surface or being exposed out of earth surface to series connect with closed water pipe;
3) Both underground water pipe and closed water pipe are all series connected with isothermal device;
4) Both underground water pipe and closed water pipe are not installed with isothermal device;
5) The isothermal functions of isothermal device can be achieved by underground water pipe or closed water pipe themselves, or the isothermal function is enhanced by additionally installing a structure body having good thermal conductivity on underground water pipe or the outside of closed water pipe.

8. The isothermal method and device using utility water thermal energy started in claim 1, wherein the relationship between the closed water pipe and underground water pipe includes one or more than one kinds of connection method listed below including:
1) The flow inlet of closed water pipe can be connected to upstream end of underground water pipe while flow outlet is connected to its downstream end;
2) The flow inlet of closed water pipe can be connected to downstream end of underground water pipe while flow outlet is connected to its upstream end.

9. The isothermal method and device using utility water thermal energy started in claim 1, wherein the water flow through closed water pipe in addition to being pumped directly with fluid pumping device, the method of water flow includes one or more than one kinds of method of flow listed below including:
1) The underground water piping flow is made to introduce water flow from the flow inlet of closed water pipe being connected to the upstream end at a particular angle such as that sharp angle < 90° to flow direction of underground water pipe and appear positive pressure is favorable for introducing water flow to enter closed water pipe, while flow outlet of closed water pipe being at a particular angle such as > 90° obtuse angle to underground water pipe flow direction and appear negative pressure is favorable for water discharge via flow outlet of closed water pipe so as to converge with water flow of underground water pipe thereby forming the divided flow effect, wherein the divided water flow passing through closed water pipe is deemed as the thermal energy transfer fluid for isothermal heat transfer and is used to operatively control the fluid valve for periodic flow direction change; or
2) Through one or more than one method of the water flow pumping, clod-drop, hot-rise effect or divided flow effect, water flow passing through closed circuit water pipe is deemed as the thermal energy transfer fluid for isothermal heat transfer to target object or target space indirectly.

10. The isothermal method and device using utility water thermal energy started in claim 1, wherein the thermal energy transfer method can be further constituted by indirect thermal energy transferring structures, wherein underground or aboveground utility piping of utility water system is provided with the enclosed type isothermal room structure, wherein thermal energy of utility piping inside water flow is transferred to the target object or target space indirectly by allowing the gaseous or liquid state fluid inside the enclosed type isothermal room to pass through the isothermal target object or target space such as the open space, building or the internal space of other closed or semi-closed structure thereby indirectly constituting the indirect isothermal energy transfer, with its constituents including one or more than one constituent methods list below:
1) the peripheral surrounding of one section of underground water pipe (103) in the utility water system is provided with an enclosed type isothermal room structure (220) being closed at both ends thereof, wherein it is installed with at least one fluid inlet (218) and a fluid piping (221) for connection to open space on one side of the closed end surface thereof, and is installed with at least one fluid outlet (219) and fluid piping (231) for connection to open space on another end thereof thereby allowing gaseous or liquid state fluid to flow in and out, and metering device (251) and flow control valve (252) can be optionally installed as needed. Said fluid is convectively circulated by the cold-drop, hot-rise effect, or is installed with fluid pumping device (123) being driven by electric motor, or other mechanical power or manpower in order when adopting unidirectional pumping to pump fluid passing through enclosed type isothermal room structure (220) to the open space via fluid piping (221) and the fluid is returned to enclosed type isothermal room structure (220) via fluid piping (231). While adopting periodic alternative pumping, one of the pumping direction is as stated above while the other is pumping the fluid, it is sent to open space via fluid piping (231), and the fluid is returned to enclosed type isothermal room structure (220) via fluid piping (221) thus performing the isothermal energy transfer to indirectly transfer thermal energy of utility water system to the open space. The above said fluid piping (221) and fluid piping (231) are individually connected to open space. The fluid inlet and outlet of fluid piping (221) and fluid piping (231) can be optionally installed with filter device (124) or not to be installed;
2) the peripheral surrounding of one section of underground water pipe (103) in the utility water system is provided with an enclosed type isothermal room structure (220) being closed at both ends thereof, wherein it is installed with at least one fluid inlet (218) and a fluid piping (221) for connection to building (110) or internal places of other closed or semi-closed structures on one side of the closed end surface thereof, and is installed with at least one fluid outlet (219) and fluid piping (231) for connection to building (110) or internal spaces of other closed or semi-closed structures on another end thereof thereby allowing gaseous or liquid state fluid to flow in and out, and metering device (251) and flow control valve (252) can be optionally installed as needed. Said fluid is convectively circulated by the cold-drop, hot-rise effect, or is installed with fluid pumping device (123) being driven by electric motor, or other mechanical power or manpower in order when adopting unidirectional pumping to pump fluid passing through enclosed type isothermal room structure (220) to building (110) or internal spaces of other closed or semi-closed structures via fluid piping (221) and the fluid is returned to enclosed type isothermal room structure (220) via fluid piping (231). While adopting periodic alternative pumping, one of the pumping direction is as stated above while the other is pumping the fluid, it is sent to building (110) or internal spaces of other closed or semi-closed structures via fluid piping (231) and the fluid is returned to enclosed type isothermal room structure (220) via fluid piping (221) thus performing the isothermal energy transfer to indirectly transfer thermal energy of utility water system to the building (110) or other closed or semi-closed structures. The above said fluid piping (221) and fluid piping (231) being individually connected to building (110) or internal spaces of other closed or semi-closed structures. The fluid inlet and outlet of fluid piping (221) and fluid piping (231) can be optionally installed with filter device (124) or not to be installed;
3) the peripheral surrounding of one section of underground water pipe (103) in the utility water system is provided with an enclosed type isothermal room structure (220) being closed at both ends thereof, wherein it is installed with at least one fluid inlet (218) and a fluid piping (221) for connection to building (110) or internal places of other closed or semi-closed structures on one side of the closed end surface thereof, and is installed with at least one fluid outlet (219) and fluid piping (231) for connection to building (110) or internal spaces of other closed or semi-closed structures on another end thereof thereby allowing gaseous or liquid state fluid to flow in and out, and metering device (251) and flow control valve (252) can be optionally installed as needed. Said fluid is convectively circulated by the cold-drop, hot-rise effect, or is installed with fluid pumping device (123) being driven by electric motor, or other mechanical power or manpower while adopting unidirectional pumping to pump outdoor fluid or through fluid piping (221) and enclosed type isothermal room structure (220) and passing through fluid piping (231) to building (110) or internal spaces of other closed or semi-closed structures, in order to perform the isothermal energy transfer to indirectly transfer thermal energy of utility water system to the building (110) or other closed or semi-closed structures. The above said fluid piping (221) is for connection to outdoor space and fluid piping (231) is connected to building (110) or internal spaces of other closed or semi-closed structures, wherein fluid inlet and outlet of fluid piping (221) and fluid piping (231) can be optionally installed with filter device (124) or not to be installed;
4) the peripheral surrounding of one section of underground water pipe (103) in the utility water system is provided with an enclosed type isothermal room structure (220) being closed at both ends thereof, wherein it is installed with at least one fluid inlet (218) and a fluid piping (221) for connection to open space on one side of the closed end surface thereof, and is installed with at least one fluid outlet (219) and fluid piping (231) for connection to open space on another end thereof thereby allowing gaseous or liquid state fluid to flow in and out, and metering device (251) and flow control valve (252) can be optionally installed as needed. Said fluid is convectively circulated by the cold-drop, hot-rise effect, or is installed with fluid pumping device (123) being driven by electric motor, or other mechanical power or manpower so that while adopting unidirectional pumping to pump fluid passing through enclosed type isothermal room structure (220) to the isothermal device (122) in the open space via fluid piping (221) and the fluid is returned to enclosed type isothermal room structure (220) via fluid piping (231). While adopting periodic alternating directional pumping, one of the pumping direction is as stated above and the other in pumping the flow, it is sent to the isothermal device (122) in the open space via fluid piping (231) and the fluid is returned to enclosed type isothermal room structure (220) via fluid piping (221) thus performing the isothermal energy transfer to indirectly transfer thermal energy of utility water system to the open space. The above said fluid piping (221) and fluid piping (231) being individually connected to the isothermal device (122);
5) the peripheral surrounding of one section of underground water pipe (103) in the utility water system is provided with an enclosed type isothermal room structure (220) being closed at both ends thereof, wherein it is installed with at least one fluid inlet (218) and a fluid piping (221) for connection to building (110) or the isothermal device (122) in internal places of other closed or semi-closed structures on one side of the closed end surface thereof, and is installed with at least one fluid outlet (219) and fluid piping (231) for connection to building (110) or the isothermal device (122) in internal spaces of other closed or semi-closed structures on another end thereof thereby allowing gaseous or liquid state fluid to flow in and out, and metering device (251) and flow control valve (252) can be optionally installed as needed. Said fluid is convectively circulated by the cold-drop, hot-rise effect, or is installed with fluid pumping device (123) being driven by electric motor, or other mechanical power or manpower so that while adopting unidirectional pumping to pump fluid passing through enclosed type isothermal room structure (220) to the isothermal device (122) and building (110) or internal spaces of other closed or semi-closed structures via fluid piping (221) and the fluid is returned to enclosed type isothermal room structure (220) via fluid piping (231). While adopting periodic alternating directional pumping, one of the pumping direction is as stated above and the other in pumping the flow, it is sent to building (110) or the isothermal device (122) in internal spaces of other closed or semi-closed structures via fluid piping (231) and the fluid is returned to enclosed type isothermal room structure (220) via fluid piping (221) thus performing the isothermal energy transfer to indirectly transfer thermal energy of utility water system to the building (110) or other closed or semi-closed structures. The above said fluid piping (221) and fluid piping (231) are individually connected to the isothermal device (122) in the building (110) or internal spaces of other closed or semi-closed structures;
---- The control device (250): It is for the operation constituted by electromechanical components, solid state electronic components, or microprocessors and relevant software and operative control interfaces to operatively control the fluid pumping device (123).

11. The isothermal method and device using utility water thermal energy started in claim 1, wherein the underground or aboveground utility piping can also be installed with the thermal energy transfer structure in parallel, such as the auxiliary isothermal energy piping of heat conducting fin type structures for mutual thermal energy transfer is provided to allow the gaseous or liquid state fluid for passing through target object or target space to perform isothermal energy transfer of the internal water flow thermal energy inside utility water piping and the one of target object or target space, its constituent contains one or more than one kind of methods listed below including:
1) the peripheral surrounding of one section of underground water pipe (103) in the utility water system is parallel provided with at least one auxiliary isothermal piping (222) being able to mutually transfer thermal energy, wherein the two can be made to an integral body, or mutually connected structures for easy thermal energy transfer, or the thermal conducting fin type structure (223) or other thermal conducting structure or heat pipe device can be installed between the two to indirectly transfer the thermal energy of water flow inside underground water pipe (103) in the utility water system to the fluid inside auxiliary isothermal piping (222), wherein two ends of auxiliary isothermal piping (222) is installed with at least one fluid inlet (218) and a fluid piping (221) for connection to open space at one end thereof, and is installed with at least one fluid outlet (219) and fluid piping (231) for connection to open space on another end thereof thereby allowing gaseous or liquid state fluid to flow in and out, and metering device (251) and flow control valve (252) can be optionally installed as needed. Said fluid is convectively circulated by the cold-drop, hot-rise effect, or is installed with fluid pumping device (123) being driven by electric motor, or other mechanical power or manpower so that while adopting unidirectional pumping to pump fluid passing through auxiliary isothermal piping (222) to the open space via fluid piping (221) and the fluid in the open space is returned to auxiliary isothermal piping (222) via fluid piping (231). While adopting periodic alternating directional pumping, one of the pumping direction is as stated above and the other in pumping the flow, it is sent to open space via fluid piping (231) and the fluid is returned to auxiliary isothermal piping (222) via fluid piping (221) thus performing the isothermal energy transfer to indirectly transfer thermal energy of utility water system to the open space. The above said fluid piping (221) and fluid piping (231) are individually connected to open space. The fluid inlet and outlet of fluid piping (221) and fluid piping (231) can be optionally installed with filter device (124) or not to be installed;
2) the peripheral surrounding of one section of underground water pipe (103) in the utility water system is parallel provided with at least one auxiliary isothermal piping (222) being able to mutually transfer thermal energy, wherein the two can be made to an integral body, or mutually connected structures for easy thermal energy transfer, or the thermal conducting fin type structure (223) or other thermal conducting structure or heat pipe device can be installed between the two to indirectly transfer the thermal energy of water flow inside underground water pipe (103) in the utility water system to the fluid inside auxiliary isothermal piping (222), wherein two ends of auxiliary isothermal piping (222) is installed with at least one fluid inlet (218) and a fluid piping (221) for connection to building (110) or internal spaces of other closed or semi-closed structures at one end thereof, and is installed with at least one fluid outlet (219) and fluid piping (231) for connection to building (110) or internal spaces of other closed or semi-closed structures on another end thereof thereby allowing gaseous or liquid state fluid to flow in and out, and metering device (251) and flow control valve (252) can be optionally installed as needed. Said fluid is convectively circulated by the cold-drop, hot-rise effect, or is installed with fluid pumping device (123) being driven by electric motor, or other mechanical power or manpower so that while adopting unidirectional pumping to pump fluid passing through auxiliary isothermal piping (222) to the building (110) or internal spaces of other closed or semi-closed structures via fluid piping (221) and the fluid in the building (110) or internal spaces of other closed or semi-closed structures is returned to auxiliary isothermal piping (222) via fluid piping (231). While adopting periodic alternating directional pumping, one of the pumping direction is as stated above and the other in pumping the flow, it is sent to building (110) or internal spaces of other closed or semi-closed structures via fluid piping (231) and the fluid is returned to auxiliary isothermal piping (222) via fluid piping (221) thus performing the isothermal energy transfer to indirectly transfer thermal energy of utility water system to the building (110) or internal spaces of other closed or semi-closed structures. The above said fluid piping (221) and fluid piping (231) are individually connected to building (110) or internal spaces of other closed type structures. The fluid inlet and outlet of fluid piping (221) and fluid piping (231) can be optionally installed with filter device (124) or not to be installed;
3) the peripheral surrounding of one section of underground water pipe (103) in the utility water system is parallel provided with at least one auxiliary isothermal piping (222) being able to mutually transfer thermal energy, wherein the two can be made to an integral body, or mutually connected structures for easy thermal energy transfer, or the thermal conducting fin type structure (223) or other thermal conducting structure or heat pipe device can be installed between the two to indirectly transfer the thermal energy of water flow inside underground water pipe (103) in the utility water system to the fluid inside auxiliary isothermal piping (222), wherein one end of auxiliary isothermal piping (222) is installed with at least one fluid inlet (218), fluid piping (221) is connected to outdoor space, the other end is installed with at least a fluid outlet (219), and a fluid piping (231) for connection to building (110) or internal spaces of other closed or semi-closed structures at one end thereof, allowing the flow of gaseous or liquid state fluid, and metering device (251) and flow control valve (252) can be optionally installed as needed. Said fluid is convectively circulated by the cold-drop, hot-rise effect, or is installed with fluid pumping device (123) being driven by electric motor, or other mechanical power or manpower while adopting single flow pumping to pump outdoor fluid flowing through fluid piping (221) passing through auxiliary isothermal piping (222) and through fluid piping (231) to the building (110) or internal spaces of other closed or semi-closed structures, in order to perform the isothermal energy transfer to indirectly transfer thermal energy of utility water system to the building (110) or internal spaces of other closed or semi-closed structures. The above said fluid piping (221) for connecting in parallel to outdoor space, and fluid piping (231) is connected to building (110) or internal spaces of other closed type structures. The fluid inlet and outlet of fluid piping (221) and fluid piping (231) can be optionally installed with filter device (124) or not to be installed;
4) the peripheral surrounding of one section of underground water pipe (103) in the utility water system is parallel provided with at least one auxiliary isothermal piping (222) being able to mutually transfer thermal energy, wherein the two can be made to an integral body, or mutually connected structures for easy thermal energy transfer, or the thermal conducting fin type structure (223) or other thermal conducting structure or heat pipe device can be installed between the two to indirectly transfer the thermal energy of water flow inside underground water pipe (103) in the utility water system to the fluid inside auxiliary isothermal piping (222), wherein two ends of auxiliary isothermal piping (222) is installed with at least one fluid inlet (218) and a fluid piping (221) for connection to open space at one end thereof, and is installed with at least one fluid outlet (219) and fluid piping (231) for connection to open space on another end thereof thereby allowing gaseous or liquid state fluid to flow in and out, and metering device (251) and flow control valve (252) can be optionally installed as needed. Said fluid is convectively circulated by the cold-drop, hot-rise effect, or is installed with fluid pumping device (123) being driven by electric motor, or other mechanical power or manpower so that while adopting unidirectional pumping to pump fluid passing through auxiliary isothermal piping (222) to isothermal device (122) in the open space via fluid piping (221) and the fluid in the open space is returned to auxiliary isothermal piping (222) via fluid piping (231). While adopting periodic alternating directional pumping, one of the pumping direction is as stated above and the other in pumping the flow, it is sent to isothermal device (122) in the open space via fluid piping (231) and the fluid is returned to auxiliary isothermal piping (222) via fluid piping (221) thus performing the isothermal energy transfer to indirectly transfer thermal energy of utility water system to the open space via isothermal device (122). The above said fluid piping (221) and fluid piping (231) being individually connected to the isothermal device (122) installed in the open space of the target;
5) the peripheral surrounding of one section of underground water pipe (103) in the utility water system is parallel provided with at least one auxiliary isothermal piping (222) being able to mutually transfer thermal energy, wherein the two can be made to an integral body, or mutually connected structures for easy thermal energy transfer, or the thermal conducting fin type structure (223) or other thermal conducting structure or heat pipe device can be installed between the two to indirectly transfer the thermal energy of water flow inside underground water pipe (103) in the utility water system to the fluid inside auxiliary isothermal piping (222), wherein two ends of auxiliary isothermal piping (222) is installed with at least one fluid inlet (218) and a fluid piping (221) for connection to building (110) or internal spaces of other closed or semi-closed structures at one end thereof, and is installed with at least one fluid outlet (219) and fluid piping (231) for connection to building (110) or internal spaces of other closed or semi-closed structures on another end thereof thereby allowing gaseous or liquid state fluid to flow in and out, and metering device (251) and flow control valve (252) can be optionally installed as needed. Said fluid is convectively circulated by the cold-drop, hot-rise effect, or is installed with fluid pumping device (123) being driven by electric motor, or other mechanical power or manpower so that while adopting unidirectional pumping to pump fluid passing through auxiliary isothermal piping (222) to the isothermal device (122) in the building (110) or internal spaces of other closed or semi-closed structures via fluid piping (221). While adopting periodic alternating directional pumping, one of the pumping direction is as stated above and the other in pumping the flow, and the fluid is returned to enclosed type isothermal room structure (220) via fluid piping (231), or it is sent to isothermal device (122) in building (110) or internal spaces of other closed or semi-closed structures via fluid piping (231) and the fluid is returned to enclosed type isothermal room structure (220) via fluid piping (221) thus performing the isothermal energy transfer to indirectly transfer thermal energy of utility water system to building (110) or internal spaces of other closed type structures via isothermal device (122). The above said fluid piping (221) and fluid piping (231) are individually connected to the isothermal device (122) in the building (110) or internal spaces of other closed type structures;
---- The control device (250): It is for the operation constituted by electromechanical components, solid state electronic components, or microprocessors and relevant software and operative control interfaces to operatively control the fluid pumping device (123).

12. The isothermal method and device using utility water thermal energy started in claim 1 can also be underground or aboveground utility water piping installed with enclosure isothermal structure in helical isolation structure, for providing another gaseous or liquid fluid passing to target object or target space, in order to transfer the heat of water flow in the utility water piping for isothermal transfer with the target object or target space, its constituent contains one or more than one kind of methods listed below including:
1) the peripheral surrounding of one section of underground water pipe (103) in the utility water system is provided with an enclosed type isothermal room structure with internal helical isolation structure (240), wherein the two ends of the enclosed type isothermal room structure with internal helical isolation structure (240) are in enclosed form, one end close to the closed surface is installed with at least a fluid inlet (218), and a fluid piping (221) passing to open space, and the other end is installed with at least a fluid outlet (219), and a fluid piping (231) passing to open space, and metering device (251) and flow control valve (252) can be optionally installed as needed. Said fluid is convectively circulated by the cold-drop, hot-rise effect, or is installed with fluid pumping device (123) being driven by electric motor, or other mechanical power or manpower while adopting unidirectional pumping, the fluid of enclosed type isothermal room structure with internal helical isolation structure (240) to flow through fluid piping (221) passing to open space, the fluid in open space passing through fluid piping (231) and return to the enclosed type isothermal room structure with internal helical isolation structure (240), thus when adopting periodic alternating flow pumping the flow of one of the pumping is as stated above while the other flow pumping flows through fluid piping (231) passing to open space, wherein the flow in open space passes fluid piping (221) and return to the enclosed type isothermal room structure with internal helical isolation structure (240), in order to performing the isothermal energy transfer to indirectly transfer thermal energy of utility water system to open space. The above said fluid piping (221) and fluid piping (231) being individually connected to the open spaces, the fluid inlet and outlet of fluid piping (221) and fluid piping (231) can optionally install filtering device (124) as needed or not to be installed;
2) the peripheral surrounding of one section of underground water pipe (103) in the utility water system is provided with an enclosed type isothermal room structure with internal helical isolation structure (240), wherein the two ends of the enclosed type isothermal room structure with internal helical isolation structure (240) are in enclosed form, one end close to the closed surface is installed with at least a fluid inlet (218), and fluid piping (221) passing to building (110) or internal space of closed or semi-closed structure, the other end is installed with at least a fluid outlet (219), and fluid piping (231) passing to building (110) or internal space of closed or semi-closed structure, in order to provide inlet or outlet gaseous or liquid fluid and metering device (251) and flow control valve (252) can be optionally installed as needed. Said fluid is convectively circulated by the cold-drop, hot-rise effect, or is installed with fluid pumping device (123) being driven by electric motor, or other mechanical power or manpower while adopting unidirectional pumping, the fluid of enclosed type isothermal room structure with internal helical isolation structure (240) to flow through fluid piping (221) passing to building (110) or internal space of closed or semi-closed structure, and passes through fluid piping (231) and return to the enclosed type isothermal room structure with internal helical isolation structure (240), thus when adopting periodic alternating flow pumping the flow of one of the pumping is as stated above while the other flow pumping flows through fluid piping (231) passing to building (110) or internal space of closed or semi-closed structure, then passes fluid piping (221) and return to the enclosed isothermal room structure (240) internally installed with helical isolation structure, in order to perform isothermal energy transfer to indirectly transfer thermal energy of utility water system and building (110) or internal space of closed or semi-closed structure. The above said fluid piping (221) and fluid piping (231) being individually connected to building (110) or internal space of closed or semi-closed structure, the fluid inlet and outlet of fluid piping (221) and fluid piping (231) can optionally install filtering device (124) as needed or not to be installed;
3) the peripheral surrounding of one section of underground water pipe (103) in the utility water system is provided with an enclosed type isothermal room structure with internal helical isolation structure (240), wherein the two ends of the enclosed type isothermal room structure with internal helical isolation structure (240) are in enclosed form, one end close to the closed surface is installed with at least a fluid inlet (218), and fluid piping (221) for connecting to outdoor space of the building, the other end is installed with at least a fluid outlet (219), for connecting to fluid piping (231) of building (110) or internal space of closed or semi-closed structure, in order to provide inlet or outlet gaseous or liquid fluid and metering device (251) and flow control valve (252) can be optionally installed as needed. Said fluid is convectively circulated by the cold-drop, hot-rise effect, or is installed with fluid pumping device (123) being driven by electric motor, or other mechanical power or manpower while adopting unidirectional pumping, thus pumping outdoor fluid or passing fluid piping (221), and passing through enclosed type isothermal room structure with internal helical isolation structure (240), and passing through fluid piping (231) to building (110) or internal space of closed or semi-closed structure, in order to perform the isothermal energy transfer to indirectly transfer warm energy of utility water system to building (110) or internal space of other closed or semi-closed structure. The above said fluid piping (221) being for connection to outdoor space, whereas fluid piping (231) being connected to building (110) or internal space of closed or semi-closed structure, the fluid inlet and outlet of fluid piping (221) and fluid piping (231) can optionally install filtering device (124) as needed or not to be installed;
4) the peripheral surrounding of one section of underground, water pipe (103) in the utility water system is provided with an enclosed type isothermal room structure with internal helical isolation structure (240), wherein the two ends of the enclosed type isothermal room structure with internal helical isolation structure (240) are in enclosed form, one end close to the closed surface is installed with at least a fluid inlet (218), and fluid piping (221) for connecting to outdoor space of the building, the other end is installed with at least a fluid outlet (219), for connecting to fluid piping (231) of open space, in order to provide inlet or outlet gaseous or liquid fluid and metering device (251) and flow control valve (252) can be optionally installed as needed. Said fluid is convectively circulated by the cold-drop, hot-rise effect, or is installed with fluid pumping device (123) being driven by electric motor, or other mechanical power or manpower while adopting unidirectional pumping, the fluid of enclosed type isothermal room structure with internal helical isolation structure (240) to flow through fluid piping (221) passing to isothermal device (122) in open space, and passes fluid piping (231) and return to the enclosed type isothermal room structure with internal helical isolation structure (240), thus when adopting periodic alternating flow pumping the flow of one of the pumping is as stated above while the other flow pumping flows through fluid piping (231) passing to isothermal device (122) in open space, and return to the enclosed type isothermal room structure with internal helical isolation structure (240) through fluid piping (221), in order to perform the isothermal energy transfer to indirectly transfer thermal energy through isothermal device (122) and open space. The above said fluid piping (221) and fluid piping (231) being individually connected to isothermal devices (122) installed in open spaces;
5) the peripheral surrounding of one section of underground water pipe (103) in the utility water system is provided with an enclosed type isothermal room structure with internal helical isolation structure (240), wherein the two ends of the enclosed type isothermal room structure with internal helical isolation structure (240) are in enclosed form, one end close to the closed surface is installed with at least a fluid inlet (218), and fluid piping (221) for connecting to building (110) or internal space of the closed or semi-closed structure, the other end is installed with at least a fluid outlet (219), for connecting to fluid piping (231) of building (110) or internal space of the closed or semi-closed structure, in order to provide inlet or outlet gaseous or liquid fluid and metering device (251) and flow control valve (252) can be optionally installed as needed. Said fluid is convectively circulated by the cold-drop, hot-rise effect, or is installed with fluid pumping device (123) being driven by electric motor, or other mechanical power or manpower while adopting unidirectional pumping, the fluid of enclosed type isothermal room structure with internal helical isolation structure (240) to flow through fluid piping (221) passing to isothermal device (122) in building (110) or internal space of the closed or semi-closed structure, and passes fluid piping (231) and return to the enclosed type isothermal room structure with internal helical isolation structure (240), thus when adopting periodic alternating flow pumping the flow of one of the pumping is as stated above while the other flow pumping flows through fluid piping (231) passing to isothermal device (122) in building (110) or internal space of the closed or semi-closed structure, and return to the enclosed type isothermal room structure with internal helical isolation structure (240) through fluid piping (221), in order to perform the isothermal energy transfer to indirectly transfer thermal energy through isothermal device (122) and building (110) or internal space of the closed or semi-closed structure. The above said fluid piping (221) and fluid piping (231) being individually connected to isothermal devices (122) installed in building (110) or internal space of the closed or semi-closed structure;
---- The control device (250): It is for the operation constituted by electromechanical components, solid state electronic components, or microprocessors and relevant software and operative control interfaces to operatively control the fluid pumping device (123);

13. A kind of external thermal conductive casing of the piping for passing through supply water flow or liquid or gaseous state fluid of thermal energy is installed with a hollow enclosure having at least two thermal conducting fluid inlet and outlet ports, wherein the hollow enclosure is for passing through thermal conducting fluid including gas or liquid in order to constitute enclosure type piping fluid thermal energy transfer device, thereby transferring the heat of fluid to the thermal conducting fluid of the hollow enclosure, and further can be provided to the gaseous or liquid state fluid having thermal energy storage capability, flowing through piping on the enclosure type piping fluid thermal energy transfer device, and to perform thermal energy isothermal transfer of gaseous or liquid state fluid passing through piping between external and enclosed body, its major structure is as follows:
---- The piping (300): It is of the tubular structure in the shape of straight line or curve or close to circle or helical or selected shape, having at least one fluid inlet (301) and at least one fluid outlet (301') for passing through water flow, liquid or gas flow of thermal energy, and having a pipe casing being made of thermal conductive material for transferring heat to the thermal conducting fluid inside hollow enclosure (302), wherein number of enclosed piping (300) can be optionally selected as needed;
---- The hollow enclosure (302): It is used for enclosing the piping casing being made of thermal conductive or non-conductive material, wherein besides of that the hollow enclosure having internal space (305) for passing through thermal conducting fluid is made with at least two thermal conducting fluid inlet and outlet ports, it appear a hollow closed structure to enclose the piping casing, wherein number of hollow enclosures (302) can be optionally selected as needed;
---- The thermal conducting fluid inlet and outlet ports (303), (304): It is for discharging or receiving thermal conducting fluid and for transferring the thermal energy of thermal conducting fluid inside hollow enclosure (302) received from the supply water flow or liquid or gaseous state fluid inside piping (300) to the outside target, wherein number of thermal conducting fluid inlet and outlet ports (303), (304) can be optionally selected as needed;
---- The internal space (305) of the hollow enclosure: It is the space formed between hollow enclosure (302) and casing of piping (300) for passing through thermal conducting fluid;
In addition, for promoting the performance of transferring the thermal energy of supply water flow or liquid or gaseous state fluid inside piping (300) to thermal fluid inside hollow enclosure, the portion of said casing of piping (300) being enclosed by hollow enclosure (302) in contact with thermal conducting fluid can be further installed with thermal conducting fin structure (306) to increase the thermal energy transfer area thereby benefiting the thermal energy transfer to thermal conducting fluid, wherein the interior of hollow enclosure (302) can be optionally installed with or not installed with thermal conducting fin (306) as needed.
-- The embodying methods for the enclosure type piping fluid thermal energy transfer device include 1) An integral structure by casing or welding, 2) a combined structure.
-- The piping structure in the whole structure of said enclosure type piping fluid thermal energy transfer device, or part of the structure of the piping, shall be made of material having thermal conductivity such as cast iron, aluminum, copper, stainless steel, or thermal conductive material for easy thermal energy transfer.
-- In practical applications of the enclosure type piping fluid thermal energy transfer device, for use in thermal energy transfer of thermal energy target object or target space of all kinds of heat storage body, the number of enclosed pipes can be one or more than one, and number of hollow structures for enclosing pipes can also be one or more than one.
The enclosure piping fluid between thermal energy transfer devices can be used for the operation of one or more than one functions listed below:
1) For use in the gaseous or liquid fluid passing pipe having thermal energy, and the transfer of thermal energy of piping, in order for isothermal transfer of isothermal space or gaseous or liquid fluid of target;
2) For use in sending gaseous or liquid external fluid having thermal energy reversely, and perform isothermal transfer of thermal energy to the gaseous or liquid fluid in the piping through thermal energy transfer of piping.

14. A kind of conducting type inter-piping fluid thermal energy transfer device for the isothermal conduction between fluids, the conducting type inter-piping fluid thermal energy transfer device has at least a first piping and at least a second piping, the first piping and the second piping are installed separately, and thermal conducting structure is installed between the first piping and the second piping, wherein the first piping is for passing water supply flow or gaseous or liquid fluid having thermal energy, the second piping is also for passing water supply flow or other liquid or gaseous heat conduction fluid, and the thermal conducting structure is used for the thermal energy of the water supply flow or other liquid or gaseous fluid in the first piping to provide isothermal thermal energy transfer to the gaseous or liquid fluid in the second piping, and further for the application of providing the gaseous or liquid fluid with heat storage energy to flow through the first piping of the conducting type inter-piping fluid thermal energy transfer device and through the thermal conducting structure of the gaseous or liquid fluid of the second piping to perform isothermal thermal energy transfer.
---- The first piping (400): It is of the straight line or curve line or near circle or helical sharp or selected geometrical shape tubular structure having at least one fluid inlet (401) and at least one fluid outlet (401') for passing through water flow, or liquid or gas state fluid of thermal energy, and having a pipe casing being made of thermal conductive material for transferring heat to internal water flow or liquid or gaseous state thermal conductive fluid inside second pipe casing being made of thermal conductive material via thermal conducting structure (3000), wherein number of first piping (400) can be optionally selected as needed;
---- The second piping (500): It is of the straight line or curve line or near circle or helical sharp or selected geometrical shape tubular structure having at least two thermal conductive fluid inlet and outlet (403), (404) for passing through supply water flow, or liquid or gas state fluid of thermal energy for transferring isothermal energy to internal water flow or liquid or gaseous state thermal conductive fluid inside first pipe casing via casing of second piping (500) itself being made of thermal conductive material, thermal conducting structure (3000), and the first pipe (400) casing being made of thermal conductive material, wherein number of first piping (500) can be optionally selected as needed;
---- The thermal conducting structure (3000): It is made of good thermal conductive material and is connected between first piping (400) and second piping (500) for isothermally transferring the heat between supply water flow or gaseous or liquid state fluid of thermal energy passing through first piping (400) and water flow or gaseous or liquid state fluid inside second piping (500) via thermal conductive casing of first piping (400), thermal conducting structure (3000) and thermal conductive casing of second piping (500);
---- The thermal conductive fluid inlet and outlet (403), (404): It is for discharging or receiving thermal conducting fluid and for transferring the thermal energy of thermal conducting fluid inside second piping (500) received from the supply water flow or liquid or gaseous state fluid inside first piping (400) to the outside target, wherein number of thermal conducting fluid inlet and outlet (403), (404) can be optionally selected as needed.
-- the first piping (400) is further additionally made with heat conducting fins (406) at the locations thereof near to thermal conducting structure (3000) to increase the heat transfer area, thereby allowing the heat of supply water or gaseous or liquid state fluid of thermal energy to water flow or gaseous or liquid state thermal conductive fluid inside second piping (500) via heat conducting fins (406) inside first piping (400), thermal conductive pipe casing of first piping itself, thermal conducting structure (3000), and thermal conductive casing of second piping (500) being internally made with heat conducting fins (406) at the locations thereof near to thermal conducting structure (3000);
-- The embodying methods for the conducting type inter-piping fluid thermal energy transfer device include 1) an integral structure by casting or welding, 2) a combined structure.
-- The whole structure of above said conducting type inter-piping fluid thermal energy transfer device is made of thermal conductive material such as cast iron, aluminum, copper, stainless steel, or made by thermal conductive material favorable for thermal energy transfer.
-- For the conducting type inter-piping fluid thermal energy transfer device in practical application, for providing thermal energy transfer of target object or target space of all kinds of application in heat storage body, the number of first piping (400) can be one or more than one, and number of second piping (500) being connected to first piping (400) via thermal conducting structure (3000) can also be one or more than one.
-- The conducting type inter-piping fluid thermal energy transfer device can be used for the operation of one or more than one functions listed below:
1) For use in the gaseous or liquid fluid passing pipe having thermal energy, and the transfer of thermal energy of piping, in order for isothermal transfer of isothermal space or gaseous or liquid fluid of target;
2) For use in sending gaseous or liquid external fluid having thermal energy reversely, and perform isothermal transfer of thermal energy to the gaseous or liquid fluid in the piping through thermal energy transfer of piping.

15. A kind of the external thermal conductive casing of the piping for passing through supply water flow or liquid or gaseous state fluid of thermal energy install a pipe enclosure structure with internal helical fluid flowing circuit, for helical isolation structure and pipe enclosure structure and pipe to form helical pipe as the pipe in fluid thermal energy transfer device, wherein the pipe enclosure structure having at least two thermal conducting fluid inlet and outlet ports for passing through thermal conducting fluid including gas or liquid, thereby transferring the heat of utility water flow to the thermal conducting fluid in the helical fluid flowing circuit and further for providing the application in all kinds of gaseous or liquid fluid having storage heat, flowing through the piping of helical isolation structure and pipe enclosure structure and pipe to form helical pipe as the pipe in fluid thermal energy transfer device, and for performing isothermal thermal energy transfer flowing through gaseous or liquid state fluid of helical pipe;
---- The piping (600): It is of the straight line or curve line or close to circle or helical shape or selected geometrical shape tubular structure having at least one fluid inlet (601) and at least one fluid outlet (601)' for passing through water flow, liquid or gas flow of thermal energy, the external of pipe (600) is installed with helical isolation structure (606), the external of the helical isolation structure (606) is installed with enclosure structure (602), the helical pipe space (605) formed by the helical isolation structure (606) and piping (600) and pipe enclosure structure (602), as helical pipe fluid flowing circuit for passing through thermal conduction fluid, in addition to at least two thermal fluid inlet and outlet (603) and (604) installed on the pipe enclosure structure, both ends is showing enclosed pipe structure, and jointly surrounding the pipe casing with the helical isolation structure (606); and through the thermal conducting action of the pipe casing, to the thermal conduction thermal energy transfer fluid inside helical pipe space (605), the number of enclosed piping (600) can be optionally selected as needed;
---- The pipe enclosure structure (602): It is used for enclosing the casing of piping (600) made of thermal conductive or non-conductive material, wherein besides of that the helical isolation structure (606) installed between the pipe enclosure structure (602) and piping (600) for the interior to form helical pipe space (605) as helical pipe fluid flowing circuit for passing through thermal conducting fluid, the pipe enclosure structure is installed with at least two thermal conducting fluid inlet and outlet ports (603) and (604) for providing inlet or outlet of heat conduction fluid, wherein the number of pipe enclosure structure (602) can be optionally selected as needed;
---- The thermal conducting fluid inlet and outlet ports (603), (604): It is for discharging or receiving thermal conducting fluid in order for the internal thermal conducting fluid of helical piping space (605) to receive the supply water flow or liquid or gaseous state fluid inside piping (600) and transfers to the outside target object or target space, wherein number of thermal conducting fluid inlet and outlet ports (603), (604) can be optionally selected as needed;
---- The internal helical piping space (605) of the pipe enclosure structure (602): It is the space formed between the helical isolation structure (606) and outer casing of piping (600) and enclosing pipe (602) for forming helical space for passing through thermal conducting fluid;
-- The helical isolation structure and pipe enclosure structure and pipe to form helical pipe as the pipe in fluid thermal energy transfer device and piping can be applied to provide all kinds of gaseous or liquid fluid for heat storage, flowing through helical isolation structure and pipe enclosure structure and pipe to form helical pipe as the pipe in fluid thermal energy transfer device, and for the isothermal thermal energy transfer of gaseous or liquid fluid flowing through helical pipe, the piping in practical application can be one or more than one, and there can also be one or more than one helical isolation structure and pipe enclosure structure and pipe to form helical pipe as the pipe in fluid thermal energy transfer device.
-- The helical isolation structure and pipe enclosure structure and pipe to form helical pipe as the pipe in fluid thermal energy transfer device can be used for the operation of one or more than one function listed below:
1) For use in the gaseous or liquid fluid passing pipe having thermal energy, and the transfer of thermal energy of piping, in order for isothermal transfer of isothermal space or gaseous or liquid fluid of target;
2) For use in sending gaseous or liquid external fluid having thermal energy reversely, and perform isothermal transfer of thermal energy to the gaseous or liquid fluid in the piping through thermal energy transfer of piping.
